(19) Europäisches Patentamt
European Patent Office
Office européen des brevets

(11) **EP 4 242 757 B1**

(12) **EUROPEAN PATENT SPECIFICATION**

(45) Date of publication and mention
of the grant of the patent:
**25.12.2024  Bulletin 2024/52**

(21) Application number: **22161483.7**

(22) Date of filing: **10.03.2022**

(51) International Patent Classification (IPC):
**G05B 17/02** *(2006.01)*     **E21B 43/00** *(2006.01)*

(52) Cooperative Patent Classification (CPC):
**G05B 17/02; E21B 41/00; E21B 43/00;**
E21B 2200/20

(54) **AUTONOMOUS FLOW MANAGEMENT SYSTEM**

AUTONOMES DURCHFLUSSVERWALTUNGSSYSTEM

SYSTÈME DE GESTION DE FLUX AUTONOME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.09.2023  Bulletin 2023/37**

(73) Proprietor: **Ledaflow Technologies DA**
**1383 Asker (NO)**

(72) Inventors:
• **MEESE, Ernst, A.**
**deceased (DE)**

• **MORIN, Alexandre**
**N-7046 Trondheim (NO)**
• **BOUCHER, Alexandre**
**31400 Toulouse (FR)**
• **NEES, Jonathan**
**N-0190 Oslo (NO)**

(74) Representative: **Onsagers AS**
**P.O. Box 1813 Vika**
**0123 Oslo (NO)**

(56) References cited:
CN-A- 114 112 822     US-A1- 2012 095 603
US-A1- 2016 341 850     US-A1- 2017 298 714

**Description**

**Field of invention**

This invention relates to an autonomous flow management system for regulating a multiphase flow in a pipeline-based transport system which utilises a novel computer-implemented method for predicting the multiphase fluid behaviour in the pipeline-based transport system.

**Background**

New oil and gas reserves are often discovered a considerable distance apart from existing oil and gas extraction facilities leading to a need for transporting unprocessed fluids over long distances, maybe hundred kilometres or more. Multiphase fluid transport over such distances are often challenging due to complex non-linear interactions between the fluid phases resulting in an irregular and unstable behaviour causing pressure drops, deposit formations, and/or liquid accumulations which may manifest themselves as a range of problematic flow phenomena such as slug flow, bubbly flow, stratified flow, annular flow, churn flow, etc.

The ability to correctly predict multiphase fluid flow in transportation systems, especially when long travelling distances are involved, is vital for the economy and operability for e.g. hydrocarbon production facilities, carbon capture and storage facilities etc. Accurate simulation models enabling predicting fluid flow behaviour consequences of different designs and approaches of the transportation system may save considerable investment costs

Furthermore, due to the irregular and unstable nature of multiphase flows, it may and occasionally does arise flow instabilities which should be mitigated to avoid overflooding of slug-capturers, overloading of flow separators or other flow receiving equipment/flow handling facilities, and to maintain and stabilise the flow as near as possible to an intended plateau production level.

For example, liquid slugs are often problematic for pipelines by causing load variations and subsequent vibrations that reduce the lifetime of pipe fittings and other vulnerable components, and/or it may lead to need for inadvertent flaring. The ability to correctly simulate the slug flow characteristics of a given pipeline flow is therefore important for investigating the effect of and implementation of mitigating actions, such as e.g. topside choking, gas lift etc. Here, both simulation time (CPU) and accuracy of the predictions are essential

**Prior art**

Prediction of the characteristics of multiphase flows requires specific computer-based simulations known as computational fluid dynamics (CFD). US 2016/341850 A1 is an example of a simulation of an oil and gas pipeline network using CFD. The computer codes of CFD-software usually consist of three main elements: (i) a pre-processor, (ii) a solver, and (iii) a post-processor [Ref. 1, pp. 1 - 4].

The pre-processor element concerns the definition/input of the fluid flow problem to be simulated by the operator via an operator interface and the transformation of the definition/input to a computer readable form applicable for the solver. The pre-processor element typically comprises:

- input/definition of the geometry of the flow region of interest, often denoted as the computational domain,
- division of the computational domain into a set of non-overlapping sub-domains, often denoted as grid generation,
- input/defining the physical and chemical phenomena to be simulated,
- input/definition of the fluid properties, and
- input/specification of boundary conditions at cells coinciding with the boundary of the computational domain.

The post-processor element concerns the output of the simulation/simulation results and may include database modules for storing data, data visualisation modules, graphic presentation modules etc.

The solver element concerns the numerical solution of the natural laws/equations governing transport phenomena, convection, diffusion and source terms (creation of destruction of an entity of the flow. The numerical algorithm for solving the equations typically consists of three steps:

i) Integration of the governing equations of the fluid flow over the computational domain.
ii) Discretisation - converting the integral equations into a system of algebraic equations, and
iii) Solving the algebraic equations by iteration.

The governing equations of the fluid flow are mathematical statements expressing the conservation laws of physics to ensure conservation of mass, momentum and energy of the fluid. The fluid is treated as a continuum where its behaviour is described in terms of macroscopic properties such as velocity, pressure, density and temperature; see e.g. [Ref 1, pp. 9-10]. The conservation laws of physics lead to a transport equation describing the motion of an arbitrary scalar fluid property, $\phi$, which in a general formulation may be given on the form:

$$\frac{\partial(\rho\phi)}{\partial t} + div(\rho\phi\boldsymbol{u}) = div(D\ grad\ \phi) + S_\phi \qquad (1)$$

where "$\rho$" is density, "$\boldsymbol{u}$" is the velocity vector, "D" is the diffusion coefficient, "$S_\phi$" is a source term for flow property $\phi$, and "t" is the time coordinate. The first term (from left) describes the rate of increase of property $\phi$ of the fluid element, the second term describes the net rate of flow of fluid property $\phi$ out of the fluid element, the third term describes the net rate of increase of fluid property $\phi$ of the fluid element due to diffusion, and the fourth term describes the rate of increase of quantity $\phi$ due to sources.

The general formulated transport equation, eqn. (1), is usually a starting point for computational procedures in computational fluid dynamics by being applied to derive specific, often simplified, partial differential equations for the conservation of mass, momentum and energy for all fluid fields/phases of the fluid flow to be simulated in the specific geometry of the computational domain. CFD-simulations of gas-liquid flows in long pipelines usually requires using one-dimensional (1D) averaged conservation equations to achieve acceptable simulation times. For example, the mass conservation of a fluid phase, k, of a one-dimensional, unsteady and compressible multiphase flow with no source terms, eqn. (1) becomes reduced and may be given on the form:

$$\frac{\partial \hat{\rho}(x)_k}{\partial t} + \frac{\partial \hat{\rho}(x)_k u(x)_k}{\partial x} = 0 \qquad (2)$$

Here "$\hat{\rho}(x)_k$" is the field mass of fluid phase k as a function of x, "$u(x)_k$" is the flow velocity for fluid phase k as a function of x, and $\hat{\rho}_k = a_k \rho_k$ where $a_k$ is the volume fraction of fluid phase k and $\rho_k$ is the mass density of fluid phase k.

The computational domain specific derived conservation equations, such as e.g. eqn. (2), are integrated and discretised and solved over the computational domain by the solver element of the CFD-software. A widespread and much applied numerical solution technique is the finite volume method which is distinguished by treating the sub-domains of the computational domain as finite control volumes and integrating the governing equations of the fluid flow over each finite control volume (grid cell) of the computational domain. Applied on e.g. eqn. (2), the finite control volume integrates the eqn. over a finite control volume, $\Delta V_i$, and over a time step, $\Delta t_n$, and may be given on the form

$$\int_{\Delta t_n} \frac{\partial}{\partial t} \left( \int_{\Delta V_i} \hat{\rho}(x)_k dV \right) dt + \int_{\Delta t_n} \frac{\partial}{\partial t} \left( \int_{\Delta V_i} div(\hat{\rho}(x)_k u(x)_k)\ dV \right) dt = 0 \qquad (3)$$

The next step in the finite volume method is transforming the continuous integral equation to a discrete algebraic equation. There are known several discretisation schemes for transforming the continuous integral equations into the discrete algebraic relations suitable for being solved numerically. The different difference schemes and their pros and cons in view of numerical stability and prediction accuracy are well known to the person skilled in the art. For flows dominated by convection, a well-known and much applied discretisation method for transforming the continuous integral equations into discrete algebraic relations is the upwind differencing scheme, see e.g. [Ref. 1, pp. 146-149], which applied on the mass conservation eqn. (2) may be given on the discrete form:

$$\frac{\Delta \hat{\rho}_{k,i}}{\Delta t_n} \Delta V_i = F_{k,i-1/2} - F_{k,i+1/2} \qquad (4)$$

Here, $F_{k,i+1/2} = \hat{\rho}_{k,i+1/2} u_{k,i+1/2} A_{i+1/2}$ is the mass flux on the right internal face of the i'th finite control volume, $A_{i+1/2}$ is the cross-sectional area of the right internal face of the i'th finite control volume, $\hat{\rho}_{k,i+1/2}$ is the field mass of fluid phase k at position $x_{i+1/2}$, and $u_{k,i+1/2}$ is the fluid flow velocity at position $x_{i+1/2}$. Depending on the choice of grid (e.g. collocated or staggered), the values at position $x_{i+1/2}$ may have to be interpolated using methods well known to the person skilled in the art, for example using a first-order upwind scheme. Correspondingly, $F_{k,i-1/2} = \hat{\rho}_{k,i-1/2} u_{k,i-1/2} A_{i-1/2}$ is the mass flux on the left internal face of the i'th finite control volume. By "marching through" the entire computational domain, i.e. defining a discrete mass conservation equation for each of the entire set of i=1, ..., N finite control volumes, the continuity equation for the conservation of mass is transformed to a set of algebraic relations of discrete values which may be solved by an explicit (direct) or implicit (indirect, i.e. iterative) solution algorithm with given boundary conditions and initial flow parameters.

Implicit numerical solution schemes determine the solution for the state of the system at a given time-step forward in time by solving an equation involving both the current state of the system (which is known) and the state of the system forward in time (which is unknown). This requires use of a matrix or iterative solution which gives somewhat extra computation but has the advantage that the numerical solution scheme is unconditionally stable and thus enables employing long time-steps which saves computation. However, at the cost of less accurate predictions.

Explicit numerical solution schemes determine the solution for the state of the system at a given time-step forward in time directly from the current state of the system (which is known). This has the advantage that the solution is significantly more accurate but is encumbered by being conditionally stable. A necessary condition for the stability of an explicit numerical solution scheme is that the numerical domain of dependence bounds the physical domain of dependence, i.e. the "physical" velocity u(x) should be less than the "marching velocity" $\Delta x/\Delta t$ of the numerical method. This condition is known as the Courant-Friedrichs-Lewy (CFL) condition, which for a one-dimensional first order upwind scheme may be given as:

$$\Delta t_n \leq \frac{\Delta x_i}{u(x_{i+1/2}, t_{n+1})} \qquad (5)$$

Here $\Delta t_n$ is the n'th time step increment in the calculation, $\Delta x_i$ is the length of the i'th finite control volume and $u(x_{i+1/2}, t_{n+1})$ is the velocity of the fluid property at the upwind boundary of the i'th finite control volume at the end of the n'th time step. The CFL-condition should hold for every finite control volume of the computational domain and for every time step applied in the numerical calculations.

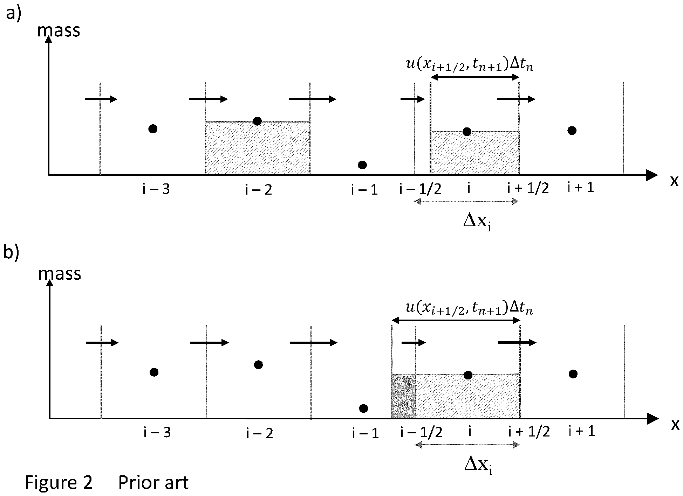

The limitation of the CFL-condition may be presented graphically such as e.g. given in figures 2a) and 2b). Both figures illustrate a section of a computational domain including five neighbouring finite control volumes having nodes at positions $x_{i-3}$, $x_{1-2}$, ... xi+i, respectively. The mass inside each finite control volume at the beginning of a n'th time step is indicated graphically by the vertical height of the node points at the centre of each finite control volume, i.e. the total amount of mass present in the finite control volume at the beginning of the time step equals the area of a rectangle being defined by the west and east internal faces, the abscissa and a horizontal line (parallel with the abscissa) crossing through the node point such as illustrated in figure 2a) by the shaded area in the i-2'th finite control volume. In the case of a first order upwind scheme, the mass passing through e.g. the internal face at position $x_{i+1/2}$ during time step $\Delta t_n$ is estimated as the area of the rectangle below the nodal point having a width determined as the product u(x$_{i+1/2}$, t$_{n+1}$)·$\Delta t_n$, where u(x$_{i+1/2}$, t$_{n+1}$) is the x-component of the velocity vector at the end of the n'th time step. If this product is equal to or less than the spatial increment $\Delta x_i$ (i.e. the width of the i'th finite control volume), the CFL -condition is fulfilled. The amount of mass estimated passing out of the i'th finite control volume (over the internal face at position $x_{i+1/2}$) during the n'th time step is less than the total amount of mass being present in the finite control volume.

However, if the product u(x$_{i+1/2}$, t$_{n+1}$)·$\Delta t_n$ is larger than the spatial increment $\Delta x_i$, a non-physical situation arises because the numerical calculations estimate that more mass will flow out of the finite control volume than it contains as illustrated in figure 2b), which leads to estimates including "negative" masses. Thus, a violation of the CFL-condition may cause the estimation of negative masses in the finite control volumes which may lead to numerical instabilities in the solver.

The CFL-condition may impose a rather harsh numerical load in CFD-calculations of multiphase flows involving rapidly moving phases and/or flow phenomena requiring a fine-masked grid to be predicted acceptably accurate. Then the CFL-condition may dictate use of very small time-increments leading to unacceptably extensive and heavy computational loads to make CFD-simulations of multiphase fluid flows a practically applicable tool for designing and/or trouble-shooting transport systems for multi-phase flows.

Griebel and Klitz [Ref. 4] discloses a fast and mass-conserving method for simulation of two-phase flow problems. One popular method is the coupling of level-set and volume-of-fluid (CLSVOF), which benefits from the advantages of both approaches and results in improved mass conservation while retaining the straightforward computation of the curvature and the surface normal. Despite its popularity, details on the involved complex computational algorithms are hard to find and if found, they are mostly fragmented and inaccurate. In contrast, this article can be used as a comprehensive guide for an implementation of CLSVOF into the existing level-set Navier-Stokes solvers on Cartesian grids in three dimensions.

US 2019/228124 discloses an improved computer implemented method for modelling transport processes in fluids is disclosed. Instead of modelling based on using an infinitesimal fluid element of a continuous medium, the method approximates fluid flow in a fluid system as a model gas flow in a model gas system being identical to the fluid system. The method is adapted to model gas flow including dilute gas flow for high Knudsen numbers (Kn). The method delivers a new basis for prediction of dynamic evolution of the model gas system by considering a pre-established or known dynamic history of the system during a pre-initial period. A new generation of Computational Fluid Dynamics software products, which are based on the disclosed analytical tools and methods, are anticipated having capability to modelling gases from the continuum flow regime (Kn<0.01) to the free molecular flow regime (Kn>10), considerably higher accuracy of prediction, and lower computation cost.

From WO 2017/174532 it is known a simulation method (100) for simulating the thermo-fluid dynamic behaviour of multiphase fluids in a hydrocarbons production and transport system, said method comprising the following steps: outlining (110) the hydrocarbons production and transport system as a plurality of interconnected component blocks, thus creating a schematic representation; modelling (120) each component block with a simplified analytical mathematical model selected from the group of models comprising at least one conduit model, a valve model, a reservoir model and a separator model, each simplified analytical mathematical model comprising a plurality of constitutive equations adapted to describe the thermo-fluid dynamic behaviour of the corresponding component block; generating (130) an oriented graph on the basis of the schematic representation; determining (140) a plurality of topological equations on the basis of the oriented graph; determining (150) a plurality of output variables adapted to describe the thermo-fluid dynamic behaviour of the system by solving the set of the plurality of topological equations and of the constitutive equations.

WO 2019/164859 discloses a compositional simulator that is fully compositional and more robust and accurate is disclosed. Relative permeability (kr) and capillary pressure (Pc) are modelled as state functions, making them unique for a given set of inputs, which can include Euler characteristic, wettability, pore connectivity, saturation, and capillary number. All of these are made to be a function of composition, T, and P or rock properties. These state function kr-Pc models are fully compositional and can fit experimental data, including complex processes such as hysteresis. The models can be tuned to measured relative permeability data, and then give consistent predictions away from that measured data set. Phase labelling problems are eliminated. Flux calculations from one grid block to another are based on phase compositions. Simulations for three or four-phase hydrocarbon phases are possible. Time-step sizes increase to stability limits of implicit-explicit methods. Fully implicit methods are possible and significant improvements are expected.

From US 2018/260499 it is known a fluid is modelled as a set of discrete particles. Each of the particles is associated with one or more properties, and a spatial distance comprising a smoothing length over which the one or more properties are to be smoothed. A corresponding trajectory is simulated for each of the particles. The corresponding trajectory is used to formulate a first solution for simulating transport within the fluid. A first predicted error is determined for the first solution. An iterative adjustment is performed to at least one of: a quantity of particles, the smoothing length, or the one or more corresponding properties, to formulate a second solution for simulating transport with the fluid, and a second predicted error is determined for the second solution, until the second predicted error is within a predefined boundary.

## Objective of the invention

The main objective of the invention is to provide an autonomous flow management system for regulating a multiphase flow in a pipeline-based transport system which utilises a computer-implemented method for predicting fluid behaviour of a multiphase flow in the pipeline-based transport system having a solver enabling using an explicit numerical solution scheme being stable independently of the Courant-Friedrichs-Lewy (CFL) condition.

A further objective of the invention is to provide an autonomous flow management system for regulating a multiphase flow in a pipeline-based transport system which utilises a computer-implemented method for predicting fluid behaviour of a multiphase flow in the pipeline-based transport system having a solver enabling using an explicit numerical solution scheme being stable independently of the Courant-Friedrichs-Lewy (CFL) condition, and which preserves the positivity of the mass everywhere.

Another objective of the invention is to provide an autonomous flow management system utilising a computer-implemented method for predicting fluid behaviour of a multiphase flow in the pipeline-based transport system to trouble-shoot and regulate the multiphase flow to mitigate flow instabilities.

## Description of the invention

The autonomous flow management system of the present invention is based on utilising a specific computer-implemented method believed to be novel for simulating a multiphase flow flowing in a pipeline-based transport system to regulate the flow with the aim to stabilize the multiphase flow at an intended flow volume plateau and/or to mitigate eventual flow instabilities/irregularities which may arise.

The autonomous flow management system according to the invention is not tied to any specific configuration of the flow management system but may have any configuration known to the skilled person as long as it comprises one or more sensor(s) monitoring one or more characteristic flow parameter(s) of a (physical) multiphase flow flowing in a (physical) pipeline-based transport system being managed by the autonomous flow management system, computer-based means for executing the specific computer-implemented method applied on a virtual model of the (physical) pipeline-based transport system with the monitored characteristic flow parameter(s) as boundary condition(s), and one or more flow regulating actuator(s) located in the (physical) pipeline-based transport system and adapted to regulate the multiphase flow, and a production management unit applying the simulation results to adjust/regulate the (physical) flow of multiphase fluid in the (physical) pipeline-based transport system by activating the one or more (physical) flow regulating actuators. The monitoring/registering of the one or more characteristic flow parameters should preferably be applied at an upstream end and at a downstream end of the (physical) pipeline-based transport system.

The specific computer-implemented method according to the invention for simulating the multiphase flow utilises the possibility of preserving the positivity of the mass in the numerical calculations independently of the Courant-Friedrichs-Lewy (CFL) condition by applying an approach for estimating the mass flux which comprises for a n'th time step, $\Delta t_n$;

applying a polynomial to spatially reconstruct the mass, $\hat{\rho}_k(x)$, for the k'th fluid phase being present in each of the N finite control volumes of the computational domain, and then

applying the discretised flow velocity, $u_k$ (which can be located either at the centre point of the mass cells in a collocated grid, or at the internal faces in a staggered grid), to determine a domain of dependence, $\mathbb{D}_{k,j}$, representing the distance the k'th fluid phase has travelled from its starting point to a j'th internal face, where $j \in 1/2, 3/2, ..., N-1/2$, during the n'th time step for each internal face j of the computational domain, and

sum the spatially reconstructed mass being present in the domain of dependence, $\mathbb{D}_{k,j}$ and assume it passes through the j'th internal face during the n'th time step.

The spatial reconstruction of the mass of the k'th fluid phase over the computational domain may be obtained by any manner known and conceivable to the skilled person, provided the following conditions are satisfied:

- The reconstructed mass function should have, within each finite control volume, an average value equal to the discretised mass at the cell's centre point. In other words, it should conserve the mass present in each cell

In one example embodiment, the spatial reconstruction of the mass of the k'th fluid phase over the computational domain may also satisfy the condition that there must not be any negative value anywhere in the reconstruction.

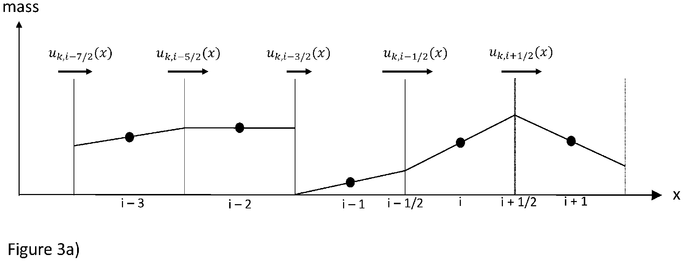

Figure 3a) illustrates schematically an example of using a first order polynomial to represent the mass present in the finite control volumes as linear interpolation lines over each finite volume. Use of higher order polynomials gives a more accurate spatial reconstruction.

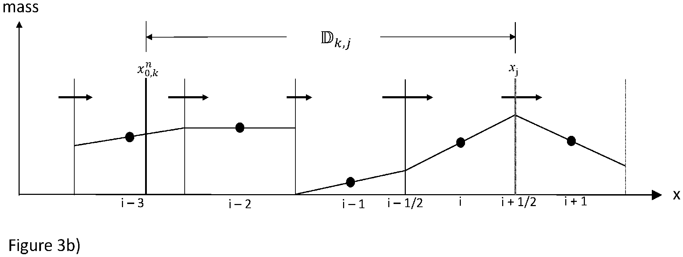

The range and length of the domain of dependence, $\mathbb{D}_{k,j}$, depends on the flow direction, the flow velocity, and the duration of the n'th time step. If the flow direction is positive, the domain of dependence stretches from the j'th internal face in a westward direction as shown in figures 3b) and 3c), first in cell i (the j'th internal face is between control volumes i and i+1). As seen on the figures, the domain of dependence, $\mathbb{D}_{k,j}$, may be longer than the i'th finite control volume such that it extends into one or more neighbouring finite control volumes. In the example shown schematically in figures 3a) and 3b), the domain of dependence stretches into two and a half neighbouring finite control volumes from position $x_{0,k}^n$ being inside the i-3'th finite control volume to position $x_j$. If the flow direction is negative, the domain of dependence stretches in eastward direction (not shown on the figures).

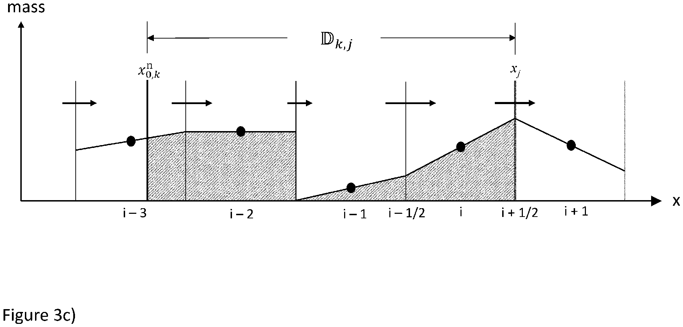

Figure 3c) illustrates the mass being present in the domain of dependence, $\mathbb{D}_{k,j}$, by the shaded area between the abscissa and the graphic representation of $\hat{\rho}_k(x)$ (in this example, linear interpolation lines). The shaded area over the domain of dependence represents the sum of mass which is assumed passing through the j'th internal face during the n'th time step. Since all mass present in the domain of dependence is summed and assumed passing through the corresponding internal face, the above approach ensures that the mass passing through the internal face actually exists, thus not pulling more mass out of a control volume than is present. Furthermore, since the domain of dependence may extend over more than one finite control volume, the numerical method is stable also when the "physical" velocity, u(x) becomes larger than the "marching velocity", $\Delta x/\Delta t$, of the numerical scheme.

By the above solution, it is obtained that the 1D-simulation of the multiphase flow becomes more accurate/realistic at similar or smaller computer loads as compared to prior art 1D-multiphase simulations. This enables the flow management system according to the invention to obtain a more stable mode of operation, which in turn can give an improved plateau production level increasing the flow volumes of multiphase fluid which may be transported through the transport system and/or improved mitigation of flow irregularities which may arise.

Thus, in a first aspect, the invention relates to an autonomous flow management system 100 for regulating flow-through of a multiphase fluid containing a number of k, where k is a positive integer, fluid phases, through a pipeline-based transport system 10, comprising:

- a flow simulation unit 30,
- a sensor configuration comprising at least a first sensor 51 located at an upstream end 11 and a second sensor 51 located at an downstream end 12 of the pipeline-based transport system 10 and measuring one or more characteristic flow parameter(s) of the multiphase fluid flowing through the pipeline-based transport system 10,
- an actuator configuration comprising at least one actuator 61 adapted to regulate the flow of fluid through the pipeline-based transport system 10, and
- a control unit 20 adapted to:

  - receive signals 53, 54 from the sensor configuration measuring one or more characteristic flow parameter(s) and transferring the signals to one or more boundary conditions 21 passed on to the flow simulation unit 30, and
  - receive simulation results 32 from the flow simulation unit 30 and transferring the simulation results to set point values 22 passed on to the actuator(s) 61 of the actuator configuration ,

  wherein
- the flow simulation unit 30 comprises a computer loaded with a software, which when executed performs a computer-implemented method simulating the fluid behaviour of the multiphase flow flowing in the pipeline-based transport system 10 with the boundary condition(s) 21 from the control unit 20, characterised in that the computer-implemented method comprises:

  applying a one-dimensional (1D) computational fluid dynamic (CFD) model describing the geometry of the pipeline-based transport system and the multiphase flow flowing therein, solving the 1D CFD model to simulate the fluid behaviour of the multiphase flow flowing in the pipeline-based transport system, and describing the determined fluid behaviour as macroscopic fluid properties such as flow velocity, pressure, density, temperature, etc., and the 1D CFD model applies a finite volume method to solve the model, wherein the geometry of the pipeline-based transport system is defined as a computational domain extending along an axis represented by the cartesian coordinate x and being divided into a set of N, where N is a positive integer, non-overlapping finite control volumes separated by an internal face between adjacent finite control volumes, and wherein the one-dimensional computational fluid dynamic model is adapted to estimate the mass flow of a k'th fluid phase out of a i'th finite control volume during a n'th time step by applying a polynomial to spatially reconstruct the mass, $\hat{\rho}_k(x)$, of the k'th fluid phase being present in each of the N finite control volumes of the computational domain, and then for each j'th internal face, where $j \in 1/2, ..., N+1/2$, of the computational domain, execute the following steps i) and ii):

  i) reconstruct the flow velocity, $u_k(x)$, of the k'th fluid phase as a function of position x and apply the reconstruction to determine a domain of dependence, $\mathbb{D}_{k,j}$, representing the distance the k'th fluid phase has travelled during the n'th time step, and

  ii) sum the spatially reconstructed mass being present in the domain of dependence, $\mathbb{D}_{k,j}$, and assume the summarised mass passes through the j'th internal face over the n'th time step, into the i'th finite control volume when $u_k(x_j) < 0$ or into the i+1'th finite control volume when $u_k(x_j) > 0$, where $u_k(x_j)$ is the flow velocity at the j'th internal face.

As used herein, the term "computational domain" is a virtual representation of the geometry of a section of a pipe containing a multiphase flow which is to be simulated. The computational domain is divided into a number of N non-overlapping finite control volumes where each i'th, i = 1,...,N, finite control volume represents a separate "slice" of the computational domain. As used herein, index "i" is applied when the focus is on the finite control volumes ($i \in 1, ..., N$) and index "j" is applied when the focus is on the internal faces $j \in 1/2, ..., N+1/2$. The notations "i-1/2" and "i+1/2" as used herein relate to the internal faces of the finite control volume i (left and right internal faces, respectively), and "j-1/2" and "j+1/2" are used to relate finite control volumes to the internal face j (left and right control volumes, respectively).

The terms "left" and "west" are used herein interchangeably to indicate a direction opposite to the grid marching direction (i.e. towards decreasing index "i" or "j"), and consequently, the terms "right" and "east" are used herein interchangeably to indicate a direction in the grid marching direction (i.e. towards increasing index "i" or "j").

As used herein, the subscript n denoting the n'th time step is omitted to simplify the notation since all relations relate to the n'th time step. The concepts of the finite volume method, explicit or implicit numerical solution algorithms, upwind differencing scheme, staggered or collocated grids, etc. and how to implement these in CFD-models are well known and mastered by persons skilled in the art.

The present invention is not limited to any choice of discretisation scheme or numerical solution algorithm except that the CFD-model shall apply a finite volume method approach. That is, the numerical scheme according to the first aspect of the invention may be applied in any 1D CFD-model regardless of which differencing scheme and/or explicit or implicit numerical solution algorithm being implemented in the CFD-model. However, the numerical scheme according to the invention is especially beneficial for explicit numerical schemes by enabling violating the CFL-condition without excessively compromising the numerical stability, making CFD-models having an explicit numerical scheme a preferred example embodiment. Explicit formulated numerical schemes have a relatively high numerical accuracy and are well suited for multicore CPUs and computational cluster machines frequently used in cloud computing.

The numerical scheme according to the first aspect of the invention relates to the solution of the transport equations for the mass transfer of each fluid phase and field present in the multiphase flow. The transport equations governing momentum and energy of the fluid phases and fields of the multiphase flow may be solved by the CFD-model in any known manner. Thus, the present invention encompasses any CFD-model having a solver for solving the transport equations where the transport equations governing the mass conservation/flow of mass is solved according to the first aspect of the invention, and where the transport equations governing the momentum and energy are solved in any known manner. The transport equations governing momentum and energy may be subject to a CFL-condition.

The reconstruction of the flow velocity, $u_k(x)$, of the k'th fluid phase as a function of position x to determine a domain of dependence, $\mathbb{D}_{k,j}$, may be obtained in several ways known to the skilled person. The invention according to the first aspect may apply any conceivable manner known to the skilled person.

As an example, linear interpolation of the discretised flow velocity within each finite control volume may be applied to reconstruct the flow velocity, $u_k(x)$, as a function of the position x, here given for the i'th finite control volume and a staggered mesh arrangement:

$$u(x) = \frac{x_{i+1/2}-x}{x_{i+1/2}-x_{i-1/2}} u_{k,i-1/2} + \frac{x-x_{i-1/2}}{x_{i+1/2}-x_{i-1/2}} u_{k,i+1/2}, \; x \in \left[x_{i-1/2}, x_{i+1/2}\right] \tag{6}$$

Eqn. (6) may be rearranged to the form:

$$u_k(x) = \bar{u}_{k.i} + \frac{\Delta u_{k,i}}{\Delta x_i}(x - \bar{x}_i), \qquad\qquad x \in \left[x_{i-1/2}, x_{i+1/2}\right] \tag{7}$$

Here $\bar{x}_i = \frac{x_{i+1/2}+x_{i-1/2}}{2}$, $\bar{u}_{k,i} = \frac{u_{k,i-1/2}+u_{k,i+1/2}}{2}$, $\Delta x_i = x_{i+1/2} - x_{i-1/2}$, and $\Delta u_{k,i} = u_{k,i+1/2} - u_{k,i-1/2}$.

Equations (6) and (7) can be written for all the finite control volumes. For example, if they are written for the i+1'th finite control volume, they will be valid in $x \in [x_{i+1/2}, x_{i+3/2}]$. By joining all the finite control volumes, a reconstruction for any x in the computational domain is obtained.

The domain of dependence, $\mathbb{D}_{k,j}$, for the j'th internal face at the n'th time step may be determined by applying and integrating the equation of the flow characteristics:

$$\frac{dx}{dt} = u_k(x), \tag{8}$$

with the velocity as expressed in eqn. (7). This gives the following relation:

$$x_k(t) = \bar{x}_i + e^{-\frac{\Delta u_{k,i}}{\Delta x_i}t}\left(x_{s,k}^n - \bar{x}_i\right) + \bar{u}_{k,i}\frac{\Delta x_i}{\Delta u_i}\left(e^{-\frac{\Delta u_{k,i}}{\Delta x_i}t} - 1\right) \tag{9}$$

where $x_{s,k}^n$ is the starting position of the flow characteristic of the k'th fluid phase at the beginning of the applied time step, crossing the position $x_k(t)$ at a time t. The finite control volume index i denotes the cell in the upwind direction and is equal to j-1/2 when the flow direction is positive, i.e. when $u_k(x_j) > 0$. When the flow direction is negative, i.e. when $u_k(x_j) < 0$, eqn. (11) still applies if the index i is set to be j+1/2. Eqn. (9) may be solved for $x_{s,k}^n$, under the requirement that $x_k(\Delta t) = x_j$, which means that at the end of the time step $\Delta t$, the characteristic will cross the internal face j. This gives:

$$x_{s,k}^n = \bar{x}_i + e^{-\frac{\Delta u_{k,i}}{\Delta x_i}\Delta t}\left(x_j - \bar{x}_i\right) + \bar{u}_{k,i}\frac{\Delta x_i}{\Delta u_i}\left(e^{-\frac{\Delta u_{k,i}}{\Delta x_i}\Delta t} - 1\right) \tag{10}$$

If the starting position $x_{s,k}^n$ lies within the i'th finite volume, the domain of dependence, $\mathbb{D}_{k,j}$, for the k'th fluid phase and the j'th internal face at the n'th time step, will extend from the starting position $x_{s,k}^n$ to the j'th internal face. In this case it may be advantageous to denote $x_{s,k}^n$ as $x_{0,k}^n$ to indicate that it is the starting point of the domain of dependence, $\mathbb{D}_{k,j}$ :

$$\mathbb{D}_{k,j} = \begin{cases} \left[x_{0,k}^n, x_j,\right] & \text{if } u_{k,j} > 0 \\ \left[x_j, x_{0,k}^n\right] & \text{if } u_{k,j} < 0 \end{cases} \tag{11}$$

One advantage of the invention according to the first aspect is that it enables applying time steps being larger than the time the flow characteristic uses to cross the i'th finite control volume without compromising the numerical stability. However, if the n'th time step is larger than the time the flow characteristic uses to cross the i'th finite control volume, the starting position determined by eqn. (10) will be lying outside of the i'th finite control volume. To accommodate for this situation, the invention according to the first aspect may further comprise a procedure to determine the domain of dependence which takes into account the time needed for the k'th flow characteristic to cross the finite control volumes. The time needed for the flow characteristic to cross a finite control volume may be determined by solving eqn. (10) for $\Delta t$, which when applied in the i'th finite control volume may be given as:

$$\Delta t_{c,k,i} = \frac{\Delta x_i}{\Delta u_{k,i}}ln\left(\frac{u_{k,i+1/2}}{u_{k,i-1/2}}\right) \tag{12}$$

Here $\Delta t_{c,k,i}$ is the time needed for the k'th flow characteristic to cross the i'th finite control volume. Eqn. (12) may also be applied to determine the time needed for the k'th flow characteristic to cross the i-1'th finite control volume by applying the variables related to the i-1'th finite control volume: $\Delta x_{i-1}$, $\Delta u_{k,i-1}$, $u_{k,i-1/2}$ and $u_{k,i-3/2}$. Eqn. (12) may be applied similarly to determine the crossing time for any other finite control volume. If the ratio of velocities is negative, Eqn. (12) becomes invalid. It happens when the velocity changes sign in the cell. In this case, no characteristic can cross the position where $u_k(x) = 0$. Thus, the crossing time is infinite, and the characteristic will start within the cell.

Close to the boundary nodes, the domain of dependence may extend out of the computational domain $\mathbb{P}$. This means that the total crossing time from the computational domains' west or east end to the internal face j is smaller than the time step $\Delta t$. Then, there is a fraction of the time step for which the mass crossing internal face j will originate from outside the computational domain. To accomplish for this situation, the method may be extended with a special treatment of the nodes. Depending on the type of boundary condition that we want to achieve, two quantities may be useful to calculate, the remainder of the time step $\Delta t_{r,k}$, and the extension of the domain of dependence outside of the computational domain.

When the domain of dependence $\mathbb{D}_{k,j}$ would stretch outside of the computational domain, $\mathbb{P}$, the remainder of the time step $\Delta t_{r,k}$ is defined as

$$\Delta t_{r,k} = \Delta t - \begin{cases} \sum_{i \in [j+1,N]} \Delta t_{c,k,i} & \text{if } u_{k,j} < 0 \\ \sum_{i \in [1,j]} \Delta t_{c,k,i} & \text{if } u_{k,j} > 0 \end{cases} \qquad (12a)$$

For the extension of the domain outside of the computational domain, $\mathbb{P}$, the velocity outside of the pipe must be extrapolated. As an example, it can be constantly extrapolated and equal to the velocity in the west- or eastmost cell, for the west or east node, respectively. Then, equation (10) can be applied with the remainder of the time step $\Delta t_{r,k}$, and $\overline{u}_{k,i}$ set equal to the extrapolated velocity. Equation (10) in this case will have a numerical issue, since there is $\Delta u_{k,i} = 0$ at the denominator due to the constant extrapolation. This issue is solved further down.

The notation for intervals as used herein follows the international standard ISO 80000-2, where the brackets "[" and "]" indicate a closed interval border, and the parenthesises "(" and ")" indicate an open interval border. For example,

[a, b] is the closed interval containing every real number from a included to b included: $[a, b] = \{x \in \mathbb{R} \mid a \le x \le b\}$

, while (a, b] is the left half-open interval from a excluded to b included: $(a,b] = \{x \in \mathbb{R} \mid a < x \le b\}$.

An example embodiment of a procedure for determining the domain of dependence of the j'th internal face and k'th fluid phase when $u_{k,j} \ne 0$, may be given as:

Initialisation:

i)

if $u_{k,j} > 0$:
set the upwind cell index i = j-1/2 and the direction index s = -1 i
f $u_{k,j} < 0$:
set the upwind cell index i = j+1/2 and the direction index s = 1

(ii) set the cell counter m = 0
(iii) set $\Delta t_r$, the remainder of the time step after crossing cells *i* to *i + sm,* equal to the full time step $\Delta t$

Step 1:

(iv) apply eqn. (12) to determine the crossing time of the (i+sm)'th finite control volume, $\Delta t_{c,k,i+sm}$
(v) if $\Delta t_{c,k,i+sm} > \Delta t_r$ (the characteristic will not cross the whole (i+sm)'th finite control volume:
Go to step 2
or else (the characteristic will cross the whole (i+sm)'th finite control volume and enter next one):
if i+s(m+1)<1 or i+s(m+1)>N: (the end of the pipe's domain has been reached)
set $\Delta t_r = \Delta t_r - \Delta t_{c,k,i+sm}$, and terminate the procedure, or else:
set m = m + 1 and $\Delta t_r = \Delta t_r - \Delta t_{c,k,i+sm}$, and go to step 1

Step 2: (vi) Apply eqn. (10) with the flow velocity shorthand's $\overline{u}_{k,i+sm}$ and $\Delta u_{k,i+sm}$ as defined below eqn. (7), and timestep $\Delta t = \Delta t_r$ to determine the characteristic starting position, $x_{0,k}^n$, which defines the domain of dependence $\mathbb{D}_{k,j}$ according to eqn. (11) and terminate the procedure.

The above procedure for determining the domain of dependence, $\mathbb{D}_{k,j}$, may be presented graphically as shown in e.g. figures 3b) and 3c), which illustrates a domain of dependence stretching from the j'th internal face across three neighbouring finite control volumes and a distance into a fourth neighbouring finite control volume. The flow direction is indicated by the black arrows located at the internal faces. The figure illustrates an example with a positive flow direction such that the domain of dependence stretches from the internal face at position $x_j$ to the starting position $x_{0,k}^n$ lying inside the i-3'th finite control volume.

The above procedure for determining the domain of dependence is described for either a negative or a positive flow direction. In the case of zero flow velocity there is no flow to be modelled and the domain of dependence will be zero. This situation may be taken care of by setting the domain of dependence, $\mathbb{D}_{k,j}$, to zero when $u_{k,j} = 0$. The particular case where the velocity change sign from one internal face to the next is naturally handled, since the condition to leave step 1, $\Delta t_{c,k,i+sm} > \Delta t_r$, where $\Delta t_{c,k,i+sm} = \infty$, will be true. Step 2 has no particular issue with velocity changing sign.

The above procedure for determination of the domain of dependence may have an issue when the velocities in cells i-1/2 and i+1/2 are equal to each other, since the denominator $\Delta u_{k,j}$ of eqns. (10) and (12) goes to towards zero. However, taking the limit of constant velocity we have that:

$$\lim_{\Delta u \to 0} x(t) = x_{0,k}^n + \bar{u}_{k,i} t \qquad (13)$$

which shows that the $\Delta u_{k,i}$ in the denominator is a numerical issue rather than a fundamental problem with the above approach. The above approach may thus be made numerically robust by e.g. defining the change in the Courant number over the i'th finite control volume, $\Delta C_i$, to be:

$$\Delta C_{k,i} = \Delta u_{k,i} \frac{\Delta t}{\Delta x_i}, \qquad (14)$$

and apply the expression of eqn. (14) to rewrite the problematic term in eqn. (10) as:

$$\bar{u}_{k,i} \frac{\left((e^{-\Delta C_{k,i}})-1\right)}{\Delta C_{k,i}} \Delta t \qquad (15)$$

and expand the expression in a Taylor series:

$$\frac{\left(1-e^{-\Delta C_{k,i}}\right)}{\Delta C_{k,i}} = 1 - \frac{1}{2}\Delta C_{k,i} + \frac{1}{6}\Delta C_{k,i}^2 + O\left(\Delta C_{k,i}^3\right) \qquad (16)$$

If the second order term in eqn. (16) is less than the ε value returned from the Fortran function EPSILON which returns a positive real value being the smallest possible value of ε making 1+ε not equal to 1 on the computer system, then the numerical value of the function on the left side of eqn. (16) is numerically indistinguishable from the two first terms of the Taylor expansion, such that a numerically robust form of eqn. (10) may be given as:

$$x_{s,k}^n = \bar{x}_i + e^{-\Delta C_{k,i}}\left(x_j - \bar{x}_i\right) - \bar{u}_{k,i}\Delta t \begin{cases} 1 - \frac{1}{2}\Delta C_{k,i} & \text{if } |\Delta C_{k.i}| < \sqrt{6\epsilon} \\ \frac{\left(1-e^{-\Delta C_{k,i}}\right)}{\Delta C_{k,i}} & \text{otherwise} \end{cases} \qquad (17)$$

where the index i=j-1/2 when the flow direction is positive, i.e. when $u_k(x_j) > 0$. When the flow direction is negative, i.e. when $u_k(x_j) < 0$, eqn. (17) still applies if the index i is set to be: i=j+1/2. $\Delta t$ is the applied time step.

Similarly, the time needed for the flow characteristic to cross a finite control volume may be made numerically robust by defining r as the ratio:

$$r_{k,i} = \frac{u_{k,i+1/2}}{u_{k,i-1/2}}, \qquad (18)$$

and rewrite eqn. (12) on the form:

$$\bar{u}_{k,i} \frac{\Delta t_{c,1}}{\Delta x_i} = \frac{r_{k,i}+1}{2} \frac{\ln(r_{k,i})}{(r_{k,i}-1)} \tag{19}$$

The Taylor expansion of the right-hand side of eqn. (19) around $r_{k,i} = 1$ is:

$$\frac{r_{k,i}+1}{2} \frac{\ln(r_{k,i})}{(r_{k,i}-1)} = 1 + \frac{1}{12}\left(r_{k,i}-1\right)^2 - \frac{1}{12}\left(r_{k,i}-1\right)^3 + \frac{3}{40}\left(r_{k,i}-1\right)^4 - O\left(r_{k,i}-1\right)^5 \tag{20}$$

If the second order term of eqn. (20) is less than the $\varepsilon$ value returned from the Fortran function EPSILON, then the numerical value of the function on the left of eqn. (20) is indistinguishable from 1, such that a numerically robust expression for the flow characteristic to cross a finite control volume, $\Delta t_{c,1}$, may be given as:

$$\bar{u}_{k,i} \frac{\Delta t_{c,1}}{\Delta x_i} = \begin{cases} 1 & \text{if } \left|r_{k,i}-1\right| < 2\sqrt{3\epsilon} \\ \frac{r_{k,i}+1}{2} \frac{\ln(r_{k,i})}{(r_{k,i}-1)} & \text{otherwise} \end{cases} \tag{21}$$

In an example embodiment, the invention according to the first aspect may further comprise determining the domain of dependence, $\mathbb{D}_{k,j}$ by executing the following steps i) to vi):

Step 1 (initialisation):

i) i

f $u_{k,j} > 0$:
set an upwind cell index i = j-1/2 and a direction index s = -1,
if $u_{k,j} < 0$:
set an upwind cell index i = j+1/2 and a direction index s = 1,

ii) set a cell counter m = 0,
iii) set $\Delta t_r$, the remainder of the time step after crossing cell *i* to *i* + *sm,* equal to the full time step $\Delta t$,

Step 2:

iv) if $\left|r_{k,i+sm} - 1\right| < 2\sqrt{3\epsilon}$:

$$\text{set } \Delta t_{c,k,i+sm} = \frac{\Delta x_{i+sm}}{\bar{u}_{k,i+sm}},$$

otherwise:

$$\text{set } \Delta t_{c,k,i+sm} = \frac{\Delta x_{i+sm}}{\bar{u}_{k,i+sm}} \left( \frac{r_{k,i+sm}+1}{2} \frac{\ln(r_{k,i+sm})}{(r_{k,i+sm}-1)} \right),$$

where

$$r_{k,i+sm} = \frac{u_{k,i+sm+1/2}}{u_{k,i+sm-1/2}},$$

and $\varepsilon$ is a positive real number obtained from executing a Fortran EPSILON computer implemented function,

v)

if $\Delta t_{c,k,i+sm} > \Delta t_r$: go to step vi),
or else if i+s(m+1)<1 or i+s(m+1)>N:
set $\Delta t_r = \Delta t_r - \Delta t_{c,k,i+sm}$, and terminate the procedure, or else:
set m = m + 1 and $\Delta$tr = $\Delta$tr - $\Delta t_{c,k,i+sm}$, and go to step iv),

Step 3):

vi) if $\left|\Delta C_{k.i+sm}\right| < \sqrt{6\epsilon}$ :

determine a characteristic starting position, $x_{0,k}^n$ , by solving the following eqn.;

$$x_{0,k}^n = \bar{x}_{i+sm} + e^{-\Delta C_{k,i+sm}}\left(x_{j+sm} - \bar{x}_{i+sm}\right) - \bar{u}_{k,i+sm}\Delta t_r \left(1 - \frac{1}{2}\Delta C_{k,i+sm}\right),$$

and

go to step vii),
Otherwise:

determine a characteristic starting position, $x_{0,k}^n$ , by solving the following eqn.;

$$x_{0,k}^n = \bar{x}_{i+sm} + e^{-\Delta C_{k,i+sm}}\left(x_{j+sm} - \bar{x}_{i+sm}\right) - \bar{u}_{k,i+sm}\Delta t_r \left(\frac{\left(1-e^{-\Delta C_{k,i+sm}}\right)}{\Delta C_{k,i+sm}}\right),$$

and

go to step vii),
where

$$\bar{x}_{i+sm} = \frac{x_{i+sm+1/2}+x_{i+sm-1/2}}{2},$$

$$\bar{u}_{k,i+sm} = \frac{u_{k,i+sm-1/2}+u_{k,i+sm+1/2}}{2},$$

$$\Delta x_{i+sm} = x_{i+sm+1/2} - x_{i+sm-1/2},$$

$$\Delta u_{k,i+sm} = u_{k,i+sm+1/2} - u_{k,i+sm-1/2},$$

$$\Delta C_{k,i+sm} = \Delta u_{k,i+sm}\frac{\Delta t}{\Delta x_{i+sm}},$$

Step 4:
vii) if $u_{k,j} > 0$:

$$\text{set } \mathbb{D}_{k,j} = \left[x_{0,k}^n, x_j\right],$$

or if $u_{k,j} < 0$:

$$\text{set } \mathbb{D}_{k,j} = \left[x_j, x_{0,k}^n\right].$$

This terminates the procedure.

As mentioned above, the spatial reconstruction of the mass in the finite control volumes may be obtained in several ways known to the person skilled in the art. The invention according to the first aspect may apply any mathematical technique for spatially reconstructing the mass in the finite control volumes known and conceivable to the skilled person, provided the following condition is satisfied:

• The reconstructed mass function should have, within each finite control volume, an average value equal to the discretised mass at the cell's centre point. In other words, it should conserve the mass present in each cell

In one example embodiment, the spatial reconstruction of the mass of the k'th fluid phase over the computational domain may also satisfy the condition that there must not be any negative value anywhere in the reconstruction.

The probably simplest spatial reconstruction is a piecewise constant function, equal within each finite control volume to the discretised mass at the finite control volume centre point. Another example is using a piecewise linear function composed of first order polynomial, one per finite control volume, whose average over the volume is equal to the discretised mass at the finite control volume centre point. Higher order polynomials can also be used and will result in a higher convergence order of the scheme. Especially even-order polynomials are suited since they allow expanding the stencil equally to both sides of the finite control volume being subject for mass reconstruction. Thus, the spatial reconstruction of the mass as a function of position variable x may be obtained by applying an even numbered polynomial:

$$\hat{\rho}_{k,i}^*(x) = \sum_{\alpha=0}^{\beta} c_\alpha \, x^\alpha, \beta \in [0,2,4,\dots] \tag{22}$$

and then, for each i'th finite control volume, where $i \in 1, \dots, N$, of the computational domain, and each k'th phase, define a set of coefficients, $c_\alpha$, through the condition:

$$\int_{x_{i-1/2}}^{x_{i+1/2}} \hat{\rho}_{k,i}^*(x)dx = \hat{\rho}_{k,i}\Delta x_i \tag{23}$$

and solve for the coefficients $c_0, c_1, \dots, c_\beta$ to express the spatial reconstruction of the mass of k'th phase present in the i'th finite control volume as $\hat{\rho}_{k,i}^*(x) = c_0 + c_1 x + c_2 x^2 + \dots + c_\beta x^\beta$. There is one set of coefficients $c_0, c_1, \dots, c_\beta$ for each phase k in each cell i, but the k and i indices are dropped for readability. By repeating this procedure for every finite control volume of the computational domain, the mass of each finite control volume is spatially reconstructed over the entire computational domain.

The simplest spatial reconstruction is to set $\beta = 0$ such that p(x) becomes the average mass of phase k in the i'th finite control volume at the beginning of the n'th time step, $\hat{\rho}_{k,i}^0$.

An example embodiment employing a second order polynomial; $p(x) = c_0 + c_1 x + c_2 x^2$ is as follows. The coefficients $c_0, c_1, c_2$ for phase k in the i'th cell are calculated by requiring that the integrals of the polynomial in the three ranges $x \in [x_{i-3/2}, x_{i-1/2}]$, $x \in [x_{i-1/2}, x_{i+1/2}]$ and $x \in [x_{i+1/2}, x_{i+3/2}]$, be equal to the masses in the i-1'th, the i'th, and the i+1'th finite control volumes, respectively. Using that:

$$\int_{x_{i-1/2}}^{x_{i+1/2}} c_0 + c_1 x + c_2 x^2 dx = c_0 \Delta x_i + c_1 \bar{x}_i \Delta x_i + c_2 \left(\bar{x}_i^2 \Delta x_i + \frac{1}{12}\Delta x_i^3\right) \tag{24}$$

the system to solve becomes:

$$c_0 \Delta x_{i-1} + c_1 \bar{x}_{i-1} \Delta x_{i-1} + c_2 \left( \bar{x}_{i-1}^2 \Delta x_{i-1} + \frac{1}{12} \Delta x_{i-1}^3 \right) = \hat{\rho}_{k,i-1} \Delta x_{i-1} \qquad (25)$$

$$c_0 \Delta x_i + c_1 \bar{x}_i \Delta x_i + c_2 \left( \bar{x}_i^2 \Delta x_i + \frac{1}{12} \Delta x_i^3 \right) = \hat{\rho}_{k,i} \Delta x_i \qquad (26)$$

$$c_0 \Delta x_{i+1} + c_1 \bar{x}_{i+1} \Delta x_{i+1} + c_2 \left( \bar{x}_{i+1}^2 \Delta x_{i+1} + \frac{1}{12} \Delta x_{i+1}^3 \right) = \hat{\rho}_{k,i+1} \Delta x_{i+1} \qquad (27)$$

Solving eqns. (25) to (27) determines the coefficients $c_0$ to $c_2$ which may be used to reconstruct the spatial reconstruction of the mass present in the i'th finite control volume as: $\hat{\rho}_{k,i}^*(x) = c_0 + c_1 x + c_2 x^2$, $x \in [x_{i-1/2}, x_{i+1/2}]$. Combining the polynomial pieces for all the control volumes in the domain give the spatial reconstruction of the mass over the whole domain, $\hat{\rho}_{k,i}^*(x)$, $x \in [x_{1/2}, x_{N+1/2}]$.

Combining the spatially reconstructed mass for the whole domain with the domains of dependence at all internal faces, the mass fluxes between the finite control volumes in Eqn. (4) may be calculated in a new manner. The mass flux over the j'th internal face is calculated by summing the mass over its associated domain of dependence by evaluating the integral

$$F_{k,j} = \frac{A_j}{\Delta t_n} \int_{\mathbb{D}_{k,j}} \hat{\rho}_k^*(x) dx \qquad (28)$$

where $\hat{\rho}_k^*(x)$ is the spatial reconstruction of the mass of the k'th fluid phase over the whole computational domain, composed of all the pieces $\hat{\rho}_{k,i}^*(x)$ for $i \in [1, N]$, which is integrated over the domain of dependence, $\mathbb{D}_{k,j}$, and $F_{k,j}$ is the mass flux across the j'th internal face. $A_j$ is the cross-sectional area at the position of the j'th internal face.

Higher order polynomials may have regions where they have negative values leading to summation of negative masses. Thus, in an example embodiment, the invention according to the first aspect may further comprise a rescaling of the spatial reconstruction of the mass which may by a limiter function known from [Ref. 2, slide 21] which limits the polynomial to zero or positive values while maintaining the condition defined in eqn. (23):

$$\widetilde{\hat{\rho}_{k,i}^*}(x) = \theta \left( \hat{\rho}_{k,i}^*(x) - \hat{\rho}_{k,i}^0 \right) + \hat{\rho}_{k,i}^0 \qquad (29)$$

where $\theta = \frac{\hat{\rho}_{k,i}^0}{\hat{\rho}_{k,i}^0 - m}$ if m < 0 or otherwise $\theta = 1$, and where $m = \min_{x \in [x_{i-1/2}, x_{i+1/2}]} \hat{\rho}_{k,i}^*(x)$.

Close to the pipe nodes, the domain of dependence may reach outside of the computational domain $\mathbb{P}$. Then, part of the mass flowing through will originate from the outside of the computational domain. Depending on the type of boundary condition that we want to achieve, the following can be done:

In one example embodiment applying an imposed mass flow rate boundary condition, the mass of phase k flowing through internal face j during the remainder of the time step, $\Delta t_{r,k}$, that was stored in the algorithm to determine the domain of dependence, will be:

$$F_{in,k} \Delta t_{r,k}$$

where $F_{in,k}$ is the imposed mass flow rate. Then, the mass flow rate through the internal face during time step $\Delta t$ will be determined by integral (28) to which is summed the flow rate during the remainder of the time step, as

$$F_{k,j} = \frac{1}{\Delta t_n}\left(A_j \int_{\mathbb{D}_{k,j}\cap\mathbb{P}} \hat{\rho}_k^*(x)dx + F_{in,k}\Delta t_{r,k}\right) \qquad (28a)$$

where $\mathbb{D}_{k,j} \cap \mathbb{P}$ denotes the part of the domain of dependence which is within the computational domain.

In another example embodiment applying an imposed pressure boundary condition, the velocity may be applied to decide the mass flow rate, given a user-defined phase split of mass entering the pipe. In turn, the difference between the user-imposed pressure and the pipe's pressure decides the velocity update during the time step, through the pressure gradient term. This may be handled by constantly extrapolating the velocity and applying Equation (17) with $\Delta C_{k,i} = 0$, and $\bar{u}_{k,i}$ being the velocity in the first or last cell, for the west or east boundary condition, respectively. Equation (17) gives in this case a $x_{s,k}^n$ outside of the computational domain. Then, the mass flow rate through the internal face during time step $\Delta t$ may be determined by integral (28), in which for the part of the domain of dependence outside the computational domain it is applied a mass defined as $\hat{\rho}_k^*(x) = \alpha_{k,in}\rho_{k,in}$, where the index *in* denotes the volume fraction imposed at the node and the density corresponding to the imposed pressure.

Numerical schemes which are higher order in space are known to generate spurious oscillations at discontinuities and extrema. On the other hand, numerical schemes which are first order in space do not. Thus, in one embodiment, the rescaling of the spatial reconstruction of the mass further comprise a step to modulate the order of the scheme locally using limiters, based, in each cell, on the value of the solution in the cell and its immediate neighbours. This gives a combined spatially first- and higher-order numerical scheme.

The spatial reconstruction of the mass may be made locally zeroth order by setting $\theta = 0$ in eqn. (29), that is, make the reconstruction constant in a cell. A zeroth-order mass reconstruction gives a spatially first-order numerical scheme. Thus, the limiter is defined to prevent the reconstructed polynomial from overshooting or undershooting the neighbouring cell values, by using a limiting condition of the same form as the one limiting negative values, i.e. applying eqn. (29) where, $\theta$ is determined as follows:

At the left internal face of the i'th internal control volume, set:

$$\theta_L = \left|\frac{\hat{\rho}_{k,i-1}^0 - \hat{\rho}_{k,i}^0}{\hat{\rho}_{k,i}^*(x_{i-1/2}) - \hat{\rho}_{k,i}^0}\right| \; if \; \text{either} \; \begin{cases}\hat{\rho}_{k,i}^0 > \hat{\rho}_{k,i-1}^0 \text{ and } \hat{\rho}_{k,i}^*(x_{i-1/2}) < \hat{\rho}_{k,i-1}^0 \\ \hat{\rho}_{k,i}^0 < \hat{\rho}_{k,i-1}^0 \text{ and } \hat{\rho}_{k,i}^*(x_{i-1/2}) > \hat{\rho}_{k,i-1}^0\end{cases}$$

and at the right internal face, set:

$$\theta_R = \left|\frac{\hat{\rho}_{k,i+1}^0 - \hat{\rho}_{k,i}^0}{\hat{\rho}_{k,i}^*(x_{i+1/2}) - \hat{\rho}_{k,i}^0}\right| \; if \; \text{either} \; \begin{cases}\hat{\rho}_{k,i}^0 > \hat{\rho}_{k,i+1}^0 \text{ and } \hat{\rho}_{k,i}^*(x_{i+1/2}) < \hat{\rho}_{k,i+1}^0 \\ \hat{\rho}_{k,i}^0 < \hat{\rho}_{k,i+1}^0 \text{ and } \hat{\rho}_{k,i}^*(x_{i+1/2}) > \hat{\rho}_{k,i+1}^0\end{cases}$$

and then set $\theta = MIN(\theta_L, \theta_R)$, and in addition, at extrema, that is, for cells satisfying the following condition

$$\left(\hat{\rho}_{k,i}^0 > \hat{\rho}_{k,i-1}^0 \text{ and } \hat{\rho}_{k,i}^0 > \hat{\rho}_{k,i+1}^0\right) \text{ or } \left(\hat{\rho}_{k,i}^0 < \hat{\rho}_{k,i-1}^0 \text{ and } \hat{\rho}_{k,i}^0 < \hat{\rho}_{k,i+1}^0\right), \text{ set } \theta = 0.$$

Finally, we keep the most restrictive $\theta$ (closest to 0) between the presently defined limiter and the limiter for the positivity preserving property in eqn. (29).

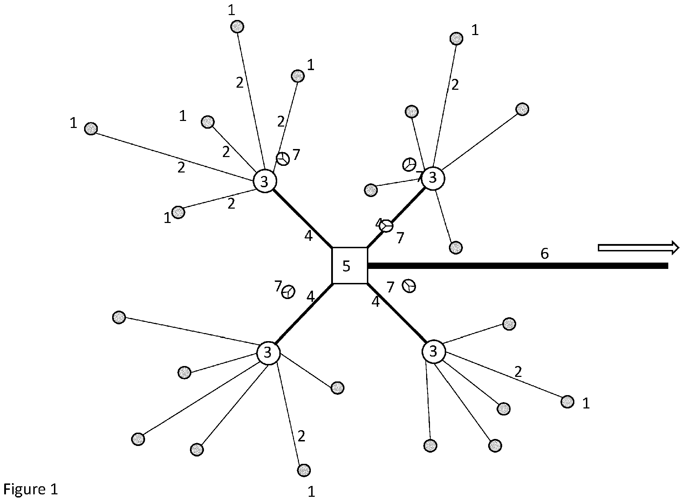

As used herein, the term "pipeline-based transport system" encompasses all components of the transport system necessary to transport the fluid including pipeline segments, splits, joins, valves, pumps, sources, sinks, etc. An example of a pipeline-based transport system for produced liquids in oil and gas extraction is shown in figure 1 which illustrates schematically an example embodiment of such transportation system. This example embodiment comprises a plurality of tie-backs/pipelines (2) connecting a production well (1) to a nearby satellite hub (3) which collects the produced fluid in a region and passes the produced fluid in a satellite pipeline (4) to a common hub (5). The example embodiment comprises four satellite hubs (3) connected to the common (5) by a satellite pipeline (4) each. The common hub (5) passes the produced fluid to a processing facility located either offshore on the sea surface via a riser (not shown in this embodiment) or to an onshore production facility via fluid transportation pipeline (6). The transport system usually involves one or more fluid pumps (7) to provide the necessary flow pressure to move the fluids through the transport system. The above example embodiment should not be interpreted narrowly. The pipeline-based transport system may have any conceivable configuration from a single pipeline for fluid transport, to interconnected networks pipelines for fluid transport in e.g. chemical process industry plants, for connecting offshore production facilities to onshore produced fluid receiving facilities etc.

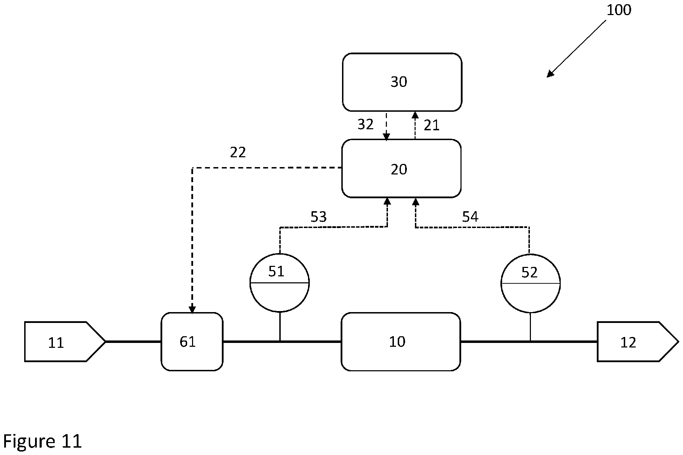

The configuration of an example embodiment of the flow management system according to the invention is schematically illustrated in the diagram shown in figure 11. The pipeline-based transport system being managed by the flow management system 100 is shown schematically on the figure as a box 10 having an upstream end 11 receiving a fluid to be transported through the transport system to a downstream end 12 where the fluid is delivered to a fluid receiving facility. The flow management system comprises further control unit 20, a flow simulation unit 30, a sensor configuration comprising at least a first sensor 51 located at the upstream end 11 and a second sensor 52 located at the downstream end 12 of the pipeline-based transport system 10, and an actuator configuration comprising at least one actuator 61 adapted to regulate the through flow of one or more fluid phases of the multiphase flow.

In another example embodiment of the flow management system according to the invention, the flow management system further comprises a second actuator 62 located at the downstream end 12 and/or a third actuator (not shown in the figure) located anywhere in-between the upstream 11 and downstream 12 end of the pipeline-based transport system 10. In this embodiment, the set point-value for the second actuator 62 is transferred from the control unit as signal 23 and the set point-value for the third actuator is transferred from the control unit as signal 24.

In one embodiment, the control unit 20 may be a Distributed Control System, a Programmable Logic Controller, an Edge Gateway, a SCADA system or a Historian System or Timeseries Database being implemented to covering automation layers 0, 1, and 2 according the standard: ANSI/ISA-95.00.01-2010 (IEC 62264-1 Mod) Enterprise-Control System Integration - Part 1: Models and Terminology.

The computer-implemented method for predicting the fluid behaviour need information of the gas and liquid phase ratios and the temperature of the multiphase flow entering the transport-system at its upstream end to predict the fluid behaviour. In some appliances, the flow rates and thus gas and liquid phase ratios of the flow entering the pipeline-based transport system is constant or practically constant. In such cases the information of the gas and liquid phase ratios may be entered as an input variable for the computer-implemented method. Thus, in one embodiment., the sensor configuration of the flow management system comprises at least a temperature sensor located at the upstream end of the pipeline-based transport system. In other appliances, the gas and liquid phase ratios may vary. This, in one embodiment, the sensor configuration of the flow management system comprises at least a flow sensor and a temperature sensor, both located at the upstream end of the pipeline-based transport system.

The control unit 20 receives sensor signals 53, 54 from the sensor configuration , which typically is electric signals, and transforms them into one or more measured flow parameter(s) such as e.g. flow velocity of one or more fluid phases, pressure, temperature, density of one or more fluid phases, volume or mass fraction of one or more fluid phases, etc. These measured one or more flow parameter(s) are passed on to the flow simulation unit (30) and applied as boundary condition(s) in the simulation of the multiphase flow.

The computer-implemented method for predicting the fluid behaviour need information of the gas and liquid phase ratios and the temperature of the multiphase flow entering the transport-system at its upstream end to predict the fluid behaviour. In some appliances, the flow rates and thus gas and liquid phase ratios of the flow entering the pipeline-based transport system is constant or practically constant. In such cases the information of the gas and liquid phase ratios may be entered as an input variable for the computer-implemented method. Thus, in one embodiment, the first sensor 51 of the sensor configuration of the flow management system comprises at least a temperature sensor located at the upstream end 11 of the pipeline-based transport system 10. In other appliances, the gas and liquid phase ratios may vary. Thus, in one embodiment, the first sensor 51 of the sensor configuration of the flow management system comprises at least a flow sensor and a temperature sensor, both located at the upstream end 11 of the pipeline-based transport system 10.

In one embodiment, the first sensor 51 of the sensor configuration of the flow management system comprises a temperature sensor located at the upstream end 11 of the pipeline-based transport system 10, and:

either:

- the first sensor 51 further comprises a pressure sensor and the second sensor 52 comprises a pressure sensor,
- the first sensor 51 further comprises a pressure sensor and the second sensor 52 comprises a flow sensor,
- the first sensor 51 further comprises a flow sensor and the second sensor 52 comprises a pressure sensor,

or

- the first sensor 51 further comprises a flow sensor and the second sensor 52 comprises a flow sensor.

The simulation results from the flow simulation unit are applied to regulate the flow in the pipeline-based transport system 10 by adjusting the actuator(s) 61 of the actuator configuration to set-point values determined by the control unit 20 taking the flow simulations results into account. The set point values may be determined by using one or several of the following algorithms that should be well known to those proficient in the art: PID control loop, Pre-trained machine learning algorithm, and/or Global or local optimum search algorithm.

In one embodiment, the actuator 61 of the actuator configuration may be either a control valse, a drum separator, a compressor, a gas injector, a pump etc., and the set-points, depending on which actuator(s) being applied, may be one or more of a setpoint for speed or power of rotating or reciprocating process equipment, as for example a compressor or a pump, a set point for a valve, a binary start/stop or open/close signal. etc.

In a third aspect, the invention relates to a method for trouble-shooting flow problems during operation of a pipeline-based fluid transportation system for transporting a multiphase fluid flow, wherein the method comprises:

- applying the computer-implemented method of the flow management system according to first aspect of the invention to predict the effect on the fluid behaviour in the transport system from a set of possible mitigation actions, determine which mitigation action which is to be physically implemented on the transport system having flow problems, and implementing the mitigation action by engaging the actuator configuration .

In a fourth aspect, the invention relates to a method for avoiding flow problems during operation of a pipeline-based fluid transportation system for transporting a multiphase fluid flow, wherein the method comprises applying the computer-implemented method of the flow management system according to anyone of claims 1 to 16 to predict the fluid behaviour in the transport system for a timespan into the future and determine the need for initiating mitigation actions during the timespan to define an operational schedule to be implemented by the actuator(s) of the actuator configuration.

The mitigation actions may be regulating the flow volumes in the transport system, topside choking, artificial lift (e.g. gas lift), and others.

**List of figures**

Figure 1 illustrates schematically an example embodiment of a pipeline system for transporting processed fluids in oil and gas extraction.

Figures 2a) and 2b) illustrate graphically the limitation of the CFL-condition when estimating mass fluxes out of control volumes.

Figure 3a) is a schematic representation of an example of a spatial reconstruction of the mass of the k'th fluid phase in the finite control volumes using a first order polynomial to represent the mass as linear interpolation lines over each finite volume.

Figure 3b) is a schematic representation of the same spatial reconstruction as shown in figure 3a) and which also illustrates an example of a domain of dependence stretching in counter-flow direction from the internal face at position $x_j$ to a position $x_{0,k}^n$ being inside the i-3'th finite control volume.

Figure 3c) is a schematic representation of the same spatial reconstruction as shown in figures 3a) and 3b) and which also illustrates the mass being present in the domain of dependence, $\mathbb{D}_{k,j}$ , by the shaded area.

Figure 4 is a graphical presentation of a comparison of predicted fluid behaviour in a pipeline made with a prior art solver and a solver according to the computer-implemented method applied by the invention.

Figure 5 is a graphical presentation of a comparison of simulated liquid level (continuous liquid plus bubbles) in a second comparison test of a stretch from 1000 to 2000 meter of a pipeline.

Figure 6 is a graphical presentation of a comparison of simulated liquid level (continuous liquid plus bubbles) in a third comparison test of a stretch from 1000 to 2000 meter of a pipeline.

Figure 7 is a graphical presentation of negative volume fractions caused by the minmod limiter used instead of the PPS, in the third comparison test.

Figure 8 is a graphical presentation of a comparison of simulated volume fraction of continuous liquid, plotted on the top row, and volume fraction of bubbles, plotted on the bottom row, of a fourth comparison test.

Figure 9 is a graphical presentation of a predicted flow using a solver not using the numerical scheme according to the invention and which the source term for the hydraulic force is deactivated to give the same velocity for the gas and liquid phase.

Figure 10 is a graphical presentation of a predicted flow using a solver using the numerical scheme according to the invention and which the source term for the hydraulic force is deactivated to give the same velocity for the gas and liquid phase.

Figure 11 is a drawing schematically illustrating an example embodiment of a flow management system according to the invention.

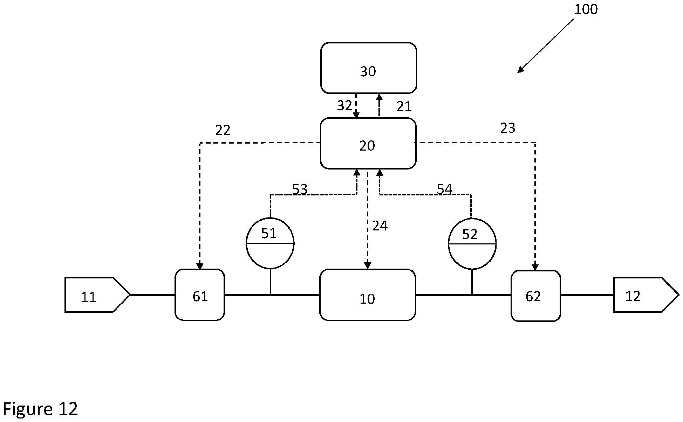

Figure 12 is a drawing schematically illustrating another example embodiment of a flow management system according to the invention.

**Verification of the invention**

The numerical scheme applied by the computer-implemented method applied by the invention according to the invention enables predicting multiphase flows in pipelines with an improved (lower) numerical diffusivity as compared to prior art numerical models. Simulations of hydrodynamic wave growth leading to plug flow (when the wave crests reach the upper parts of the pipe wall and slows the liquid flow) are particularly sensitive to numerical diffusion. At the same time, slug flows involve relatively rapid moving fluid phases involving relatively high pressure and mass gradients which requires relatively fine mesh sizes and relatively small time steps making such simulations particularly computational heavy.

Comparison test 1

The fluid behaviour in a 400 m long (linear) pipe having an internal diameter of 0.194 m and inclined 1° downward, and which is supplied with gas corresponding to a superficial velocity of 3.8 m/s and a liquid corresponding to a superficial velocity of 1 m/s at pressure 20 bar is predicted with a prior art solver utilising an implicit numerical scheme in which the mass fluxes are made partially explicit and compared with a similar prediction made with an implicit-explicit solver (implicit in pressure and velocity, explicit in mass and momentum convection) having incorporated the numerical scheme according to the first aspect of the invention. These flow conditions are known to cause wave growth towards the end of the pipe.

By performing the predictions with a relatively coarse grid, the numerical diffusion will dominate the physical models of the CFD-code and thus enabling assessing which meshes on the prior art and the present solver yield similar results by comparing the distance required for onset of the wave build-up as a measure of the accuracy of the numerical schemes.

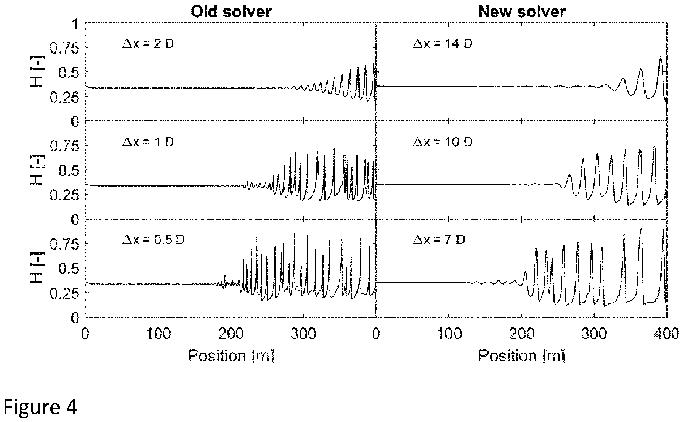

The prior art solver was run three times with a mesh size ($\Delta x_i$) equal to 0.5, 1, and 2 timed the pipe diameter D, respectively. The result is shown graphically in figure 4 under the header "old solver". The predictions gave a stratified flow at the downstream end of the pipe and an onset of wave build-up at 200 to 300 metres downstream into the pipe. The solver according to the first aspect of the invention obtained the same onset of the wave build-up when applying a mesh size of 7, 10, and 14 times the pipe diameter. These results are also shown in figure 4 under the header "new solver".

From figure 4 we see that a solver according to the invention may use a mesh in the order of 10 times coarser to yield a similar onset of wave growth as a prior art solver, which represents a significant reduction in the computational load. The comparison is rather qualitative, but still gives an order of magnitude of the reduction in numerical diffusion, which gives increased numerical accuracy. Note that this case only involves hydrodynamic wave growth, which is particularly sensitive to numerical diffusion. One cannot necessarily expect such mesh ratios in all types of flows, since for example terrain slugging is not particularly sensitive to numerical diffusion. Still, even in cases dominated by terrain slugging, it might still be important to resolve hydrodynamic slugs, thus setting a minimum requirement on the refinement of the mesh.

Comparison test 2

This test investigates the numerical load when using an explicit solver having implemented the numerical scheme according to the first aspect of the invention to simulate the fluid behaviour in a 2 km long stretch and duration of 500 seconds of the same pipe fed with the same multiphase flow as described above for comparison test 1. The solver applies a second order polynomial for spatial reconstruction of the mass in the finite control volumes and a second order limiter function to rescale the spatial reconstruction to preserve positivity of the mass over the computational domain.
As a comparison, the same explicit solver is applied without the numerical scheme according to the first aspect of the invention but instead applies a higher-order upwind scheme using the minmod limiter function [Ref.3, page 110]. A second comparison is also made with the same explicit solver without the numerical scheme according to the first aspect of the invention but a higher-order upwind scheme using the monotonized central-difference (MC) limiter function [Ref. 3, p.112]. MC limiter is expected to give more accurate results than minmod, at the risk of being numerically unstable. Amongst other, positivity of mass is never assured with higher-order limiters, but minmod is very mild and safe. MC is recommended in the same reference to be "a good default choice for a wide class of problems".
Without the numerical scheme according to the first aspect of the invention, it is necessary to apply a CFL condition defined with the true numerical velocities (the actual $u_{k,j}$ used in the scheme), set to be CFL < 0.8. In addition, the CFL may be violated during or at the end of the time step. This cannot be allowed, and if CFL > 1 during or at the end of the time step, the time step is restarted with a smaller $\Delta t$. Time step restarts can happen even with the numerical scheme according to the first aspect of the invention, for other reasons. Even though the numerical scheme according to the first aspect of the invention removes the CFL restriction related to mass convection, other physical phenomena which may be implemented in the numerical model may require strict time step restriction to preserve numerical stability (e.g. for surface waves), or less strict restriction to preserve modelling accuracy (e.g. friction of phase change). Thus, a CFL-condition is still applied in these example numerical calculations, but less strictly and only at the beginning of the time step. A local violation of the CFL condition is acceptable - avoiding restriction of the time step for the whole pipe due to one too high velocity - as is also a violation of the CFL condition at the end of the time step, and as such a time step restart can be avoided.
The resulting computational load is shown in table 1. Table 1 compares the time steps applied in the numerical simulations, number of restarts during the simulation, total used CPU time and time used to solve the mass transport and pressure equations (marked as "Time in mass conv."). The column marked "PPS" is the simulation with the numerical scheme according to the first aspect of the invention. The column marked "NO PPS - minmod" is the first comparison simulation without the numerical scheme according to the first aspect of the invention but applying the minmod limiter function and the column marked "No PPs - MC" is the second comparison simulation without the numerical scheme according to the first aspect of the invention but applying the MC limiter function. The mesh size in all three simulations was 5 times the pipe diameter.

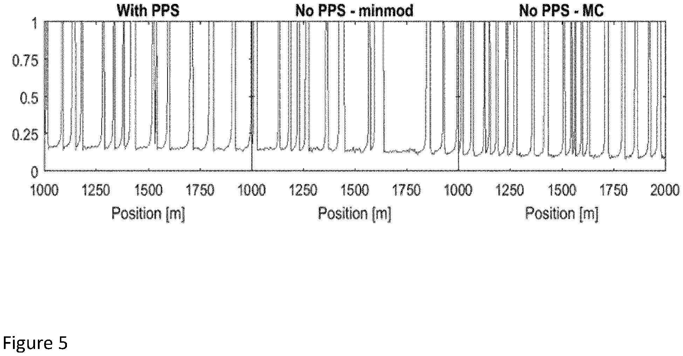

Figure 5 is a graphical presentation of the simulated liquid level (continuous liquid plus bubbles) in the stretch from 1000 to 2000 meter of the pipe for all three simulations. The "left box" marked "PPS" presents the simulated liquid level along the pipe segment obtained from the explicit solver having implemented the numerical scheme according to the first aspect of the invention. The "middle box" marked "No PPS - minmod" presents the simulated liquid level along the pipe segment obtained from the explicit solver using the minmod limiter function without the numerical scheme according to the first aspect of the invention, while the "right box" marked "No PPS - MC" presents the same for the simulation with the explicit solver using the MC limiter function without the numerical scheme according to the first aspect of the invention.

**Table 1 Comparison of numerical workload**

|                     | PPS      | No PPS - minmod | No PPS - MC |
|---------------------|----------|-----------------|-------------|
| Time step, $\Delta t$ | 0.0933 s | 0.0971 s        | 0.0686 s    |
| Number of restarts  | 0        | 90              | 1356        |
| Used CPU time       | 246 s    | 208 s           | 328 s       |
| Time in mass conv.  | 48 s     | 7 s             | 25 s        |

The explicit solver having implemented the numerical scheme according to the first aspect of the invention (PPS) runs with the same average time step as the explicit solver using the minmod limiter function (minmod). This means that the ability to avoid time step restriction due to mass convection is not playing a role in this comparison. Most of the time, however, this ability is useful in case of velocity spikes at the slug/bubble transition, which is an artifact of the underlying physical models. The time step is considerably lower with the explicit solver using the MC limiter function (MC), as well as the number of time step restarts, indicating that there are probably velocity spikes with this scheme.

The numerical scheme according to the first aspect of the invention is relatively computationally heavy, as can be observed in the lower row of Table 1. Despite running with the same time step, the CPU time of the numerical scheme according to the first aspect of the invention (PPS) is 18% higher than with the explicit solver using the minmod limiter function (minmod). The difference in run time is coming from the execution time of the PPS, which is what makes the difference in the row 'Time in mass conv' of Table 1. The comparison of the CPU time with MC is however in favor of the PPS, due to the lower average time step, resulting in a higher total number of time steps to solve, as well as to the number of time step restarts, which requires to start over with a new smaller time step.

Comparison test 3

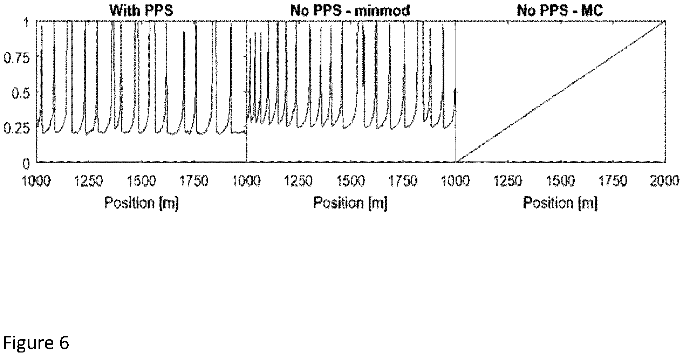

This test is similar to comparison test 2 above except for applying the same three numerical simulations on a 2000 meters long linear pipe having an internal diameter of 0.290 m and inclined 1° upward, and which is supplied with gas corresponding to a superficial velocity of 1.5 m/s and a liquid corresponding to a superficial velocity of 0.075 m/s at pressure 20 bar. The results are given in table 2 and in figure 6, respectively.

In this case, the explicit solver using the MC limiter function (MC) was not able to complete the simulation, due to instability issues. The explicit solver using the minmod limiter function ran with a time step close to twice as small as the explicit solver having implemented the numerical scheme according to the first aspect of the invention. The consequence is that the explicit solver with the PPS in this case run 25% faster, i.e. a total CPU time of 94 s versus 124 s, even though it is spending 20 s more, 26 s versus 6 s, in run time solving the mass transport equations as compared to the No PPS run.

**Table 2**

|  | PPS | No PPS, minmod | No PPS, MC |
|---|---|---|---|
| Time step | 0.2160 s | 0.1106 s | Crashed |
| N restarts | 188 | 273 |  |
| Total CPU time | 94 s | 124 s |  |
| Time in mass convection module | 26 s | 6 s |  |

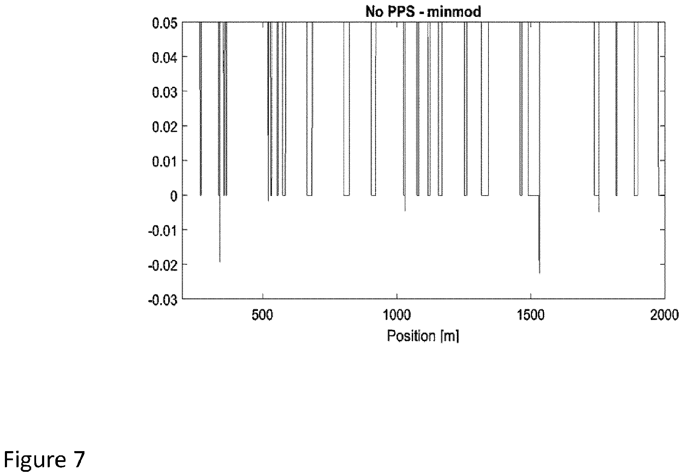

These results indicate that "No PPS - minmod" seems to be more diffusive than PPS, as suggested by the fact that many waves are not reaching the top of the pipe and becoming slugs. In addition, negative masses are observed with minmod as limiter, even though the minmod limiter is a mild higher-order limiter. Figure 7 shows an example of this in a zoom on the simulated gas volume fraction using the No PPS - minmod scheme (middle plot in Figure 6). With the PPS, no negative mass can be observed at any time step.

Comparison test 4

This test is a 1000 m pipe of diameter 0.1 m, initialised with single-phase gas at rest. Then, liquid is injected at the left node at a superficial velocity of 1 m/s. Both liquid and gas are incompressible. We expect to see a liquid front between single-phase gas and single-phase liquid propagate at a velocity of 1 m/s. The same numerical schemes as in tests 2 and 3 are applied (PPS, No PPS - minmod and No PPS - MC, referring to a solver having implemented the numerical scheme according to the first aspect of the invention, a solver using the minmod limiter function without the numerical scheme according to the first aspect of the invention, and a solver using the MC limiter function without the numerical scheme according to the first aspect of the invention, respectively).

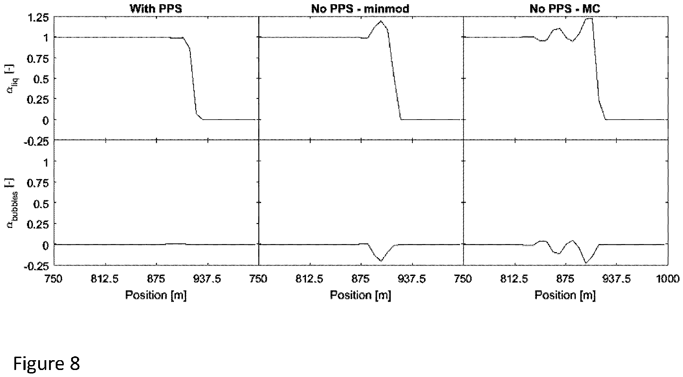

After 900 s, the results are plotted in Figure 8. The volume fraction of continuous liquid is plotted on the top row, and the volume fraction of bubbles is plotted on the bottom row. With the PPS applied, there are no volume fractions below 0 or above 1, while both minmod and MC limiters cause negative volume fractions (the sum of all volume fractions - continuous gas and liquid, bubbles and droplets at a given position in the pipe are always equal to 1, plus or minus the convergence criterion - equal to 1e-3 in the present case). This is a well-known behaviour of higher-order limiters to cause oscillations at discontinuities if they do not degenerate to first order fast enough. Minmod being more cautious than MC, it causes milder oscillations. The result of oscillations is that negative volume fractions are predicted. We can see here that the PPS keeps all volume fractions positive.

Comparison test 5

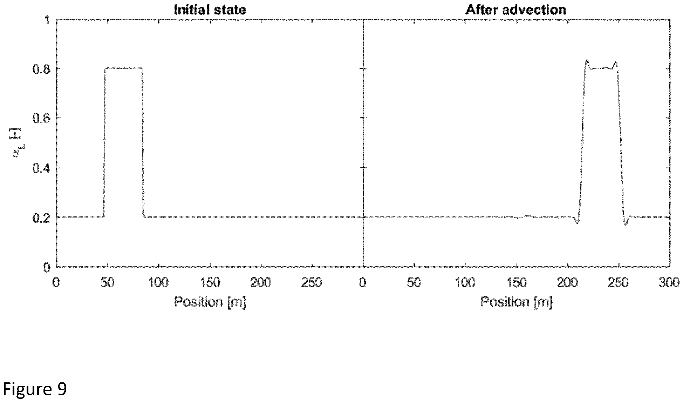

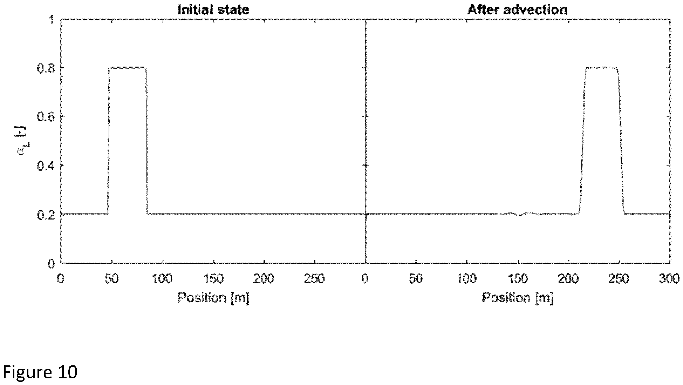

For this test, the source term for the hydraulic force (pressure gradient due to a gradient in liquid level) is deactivated. Thus, if the gas and liquid velocities are exactly equal, the liquid-gas interface is expected to be advected as is at the same velocity. It is run with a solver having implemented the numerical scheme according to the first aspect of the invention, with a mass reconstruction using second order polynomials. A 300 m flat pipe is meshed with 318 cells, with an initial velocity of 5.57 m/s both in gas and in liquid, and an initial crenel-shaped gas-liquid interface as shown in Figure 9, left plot. The liquid and gas densities are respectively 818.7 kg/m$^3$ and 64 kg/m$^3$. The inlet boundary condition is defined to inject the phases with exactly the right mass rate to keep the same volume fractions and velocities. In Figure 9, right plot, the result after advection during 30 s is plotted. The crenel-shaped interface is advected and somewhat similar to the initial shape, but spurious oscillations at both discontinuities have appeared. In Figure 10, the result is plotted after running the test with a solver having implemented the numerical scheme according to the first aspect of the invention, with a mass reconstruction using second order polynomials, and a limiter to avoid spurious oscillations. On the right plot, the spurious oscillations have disappeared. Numerical diffusion has smoothed the discontinuities to some extent, as expected. The crenel shape is otherwise advected as is. The small waves at ca. 150 m are small disturbances caused by the inlet node at the start of the case, which have been advected.

**References**

1 Veersteg, H. K. and Malalasekera, W., sec. Ed. (2007), "An Introduction to Computational Fluid Dynamics", Pearson Education Limited, ISBN: 978-0-13-127498-3

2 Chi-Wang Shu, "Positivity-preserving high order schemes for convection dominated equations", presentation held at Brown University and retrievable on the internet: https://cfd.ku.edu/JRV/Shu.pdf

3 Randall J. Leveque, Finite Volume Methods for Hyperbolic Problems, Cambridge University Press, 2002, ISBN 978-0-521-00924-9

4 M. Griebel and M. Klitz, "CLSVOF as a fast and mass-conserving extension of the level-set method for the simulation of two-phase flow problems", NUMERICAL HEAT TRANSFER, PART B 2017, VOL. 71, NO. 1, 1-36 http://dx.doi.org/10.1080/10407790.2016.1244400

**Claims**

1. An autonomous flow management system (100) for regulating flow-through of a multiphase fluid containing a number of k, where k is a positive integer, fluid phases, through a pipeline-based transport system (10), comprising:

   - a flow simulation unit (30),
   - a sensor configuration comprising at least a first sensor (51) located at an upstream end (11) and a second sensor (51) located at an downstream end (12) of the pipeline-based transport system (10) and measuring one or more characteristic flow parameter(s) of the multiphase fluid flowing through the pipeline-based transport system (10),
   - an actuator configuration comprising at least one actuator (61) adapted to regulate the flow of fluid through the pipeline-based transport system (10), and
   - a control unit (20) adapted to:

      - receive signals (53, 54) from the sensor configuration measuring one or more characteristic flow parameter(s) and transferring the signals to one or more boundary conditions (21) passed on to the flow simulation unit (30), and
      - receive simulation results (32) from the flow simulation unit (30) and transferring the simulation results to set point values (22) passed on to the actuator(s) (61) of the actuator configuration ,

   wherein

      - the flow simulation unit (30) comprises a computer loaded with a software, which when executed performs a computer-implemented method simulating the fluid behaviour of the multiphase flow flowing in the pipeline-based transport system (10) with the boundary condition(s) (21) from the control unit (20), **characterised in that** the computer-implemented method comprises:

applying a one-dimensional (1D) computational fluid dynamic (CFD) model describing the geometry of the pipeline-based transport system and the multiphase flow flowing therein,
solving the 1D CFD model to simulate the fluid behaviour of the multiphase flow flowing in the pipeline-based transport system, and describing the determined fluid behaviour as macroscopic fluid properties such as flow velocity, pressure, density, temperature, etc., and
the 1D CFD model applies a finite volume method to solve the model, wherein the geometry of the pipeline-based transport system is defined as a computational domain extending along an axis represented by the cartesian coordinate x and being divided into a set of N, where N is a positive integer, non-overlapping finite control volumes separated by an internal face between adjacent finite control volumes,
and wherein
the one-dimensional computational fluid dynamic model is adapted to estimate the mass flow of a k'th fluid phase out of a i'th finite control volume during a n'th time step by applying a polynomial to spatially reconstruct the mass, $\hat{\rho}_k(x)$, of the k'th fluid phase being present in each of the N finite control volumes of the computational domain,
and then
for each j'th internal face, where $j \in 1/2, ..., N+1/2$, of the computational domain, execute the following steps i) and ii):

i) reconstruct the flow velocity, $u_k(x)$, of the k'th fluid phase as a function of position x and apply the reconstruction to determine a domain of dependence, $\mathbb{D}_{k,j}$, representing the distance the k'th fluid phase has travelled during the n'th time step, and

ii) sum the spatially reconstructed mass being present in the domain of dependence, $\mathbb{D}_{k,j}$, and assume the summarised mass passes through the j'th internal face over the n'th time step, into the i'th finite control volume when $u_k(x_j) < 0$ or into the i+1'th finite control volume when $u_k(x_j) > 0$, where $u_k(x_j)$ is the flow velocity at the j'th internal face.

2. The autonomous flow management system according to claim 1, wherein the software performs a computer-implemented method where the CFD-model applies an explicit numerical solution scheme.

3. The autonomous flow management system according to claim 1 or 2, wherein the software performs a computer-implemented method further comprising determining the domain of dependence for the i'th finite control volume, $\mathbb{D}_{k,j}$ by executing the following steps i) to vii):

i)

if $u_{k,j} > 0$: set an upwind cell index i = j-1/2 and a direction index s = -1,
if $u_{k,j} < 0$: set an upwind cell index i = j+1/2 and a direction index s = 1,

ii) set a cell counter m = 0,
iii) set $\Delta t_r$ equal to the full time step $\Delta t$,
iv)

if $\left| r_{k,i+sm} - 1 \right| < 2\sqrt{3\epsilon}$:

$$\text{set } \Delta t_{c,k,i+sm} = \frac{\Delta x_{i+sm}}{\overline{u}_{k,i+sm}},$$

otherwise:

$$\text{set } \Delta t_{c,k,i+sm} = \frac{\Delta x_{i+sm}}{\bar{u}_{k,i+sm}}\left(\frac{r_{k,i+sm}+1}{2}\frac{ln(r_{k,i+sm})}{(r_{k,i+sm}-1)}\right),$$

where

$$r_{k,i+sm} = \frac{u_{k,i+sm+1/2}}{u_{k,i+sm-1/2}},$$

and $\varepsilon$ is a positive real number obtained from executing a Fortran EPSILON computer implemented function,

v)

if $\Delta t_{c,k,i+sm} > \Delta t_r$:
go to step vi),
or else if i+s(m+1)<1 or i+s(m+1)>N: set $\Delta t_r = \Delta t_r - \Delta t_{c,k,i+sm}$, and terminate the procedure,
or else:
set m = m + 1 and $\Delta t_r = \Delta t_r - \Delta t_{c,k,i+sm}$, and go to step iv),

vi) if $|\Delta C_{k,i+sm}| < \sqrt{6\epsilon}$ : determine a characteristic starting position, $x_{0,k}^n$ , by solving the following eqn.;

$$x_{0,k}^n = \bar{x}_{i+sm} + e^{-\Delta C_{k,i+sm}}\left(x_{j+sm} - \bar{x}_{i+sm}\right) - \bar{u}_{k,i+sm}\Delta t_r\left(1 - \frac{1}{2}\Delta C_{k,i+sm}\right),$$

and go to step vii),
Otherwise:

determine a characteristic starting position, $x_{0,k}^n$ , by solving the following eqn.;

$$x_{0,k}^n = \bar{x}_{i+sm} + e^{-\Delta C_{k,i+sm}}\left(x_{j+sm} - \bar{x}_{i+sm}\right) - \bar{u}_{k,i+sm}\Delta t_r\left(\frac{\left(1-e^{-\Delta C_{k,i+sm}}\right)}{\Delta C_{k,i+sm}}\right),$$

and
go to step vii), where

$$\bar{x}_{i+sm} = \frac{x_{i+sm+1/2}+x_{i+sm-1/2}}{2},$$

$$\bar{u}_{k,i+sm} = \frac{u_{k,i+sm-1/2}+u_{k,i+sm+1/2}}{2},$$

$$\Delta x_{i+sm} = x_{i+sm+1/2} - x_{i+sm-1/2},$$

$$\Delta u_{k,i+sm} = u_{k,i+sm+1/2} - u_{k,i+sm-1/2},$$

$$\Delta C_{k,i+sm} = \Delta u_{k,i+sm}\frac{\Delta t}{\Delta x_{i+sm}}, \text{ and}$$

vii) if $u_{k,j} > 0$:

$$\text{set } \mathbb{D}_{k,j} = \left[ x_{0,k}^n, x_j \right],$$

or if $u_{k,j} < 0$:

$$\text{set } \mathbb{D}_{k,j} = \left[ x_j, x_{0,k}^n \right].$$

**4.** The autonomous flow management system according to claim 3, wherein the software performs a computer-implemented method further comprising obtaining the spatial reconstruction over the whole domain of the mass, $\hat{\rho}_k^*(x)$, of the k'th fluid phase being present in each of the N finite control volumes of the computational domain by:

applying in each cell a polynomial of even degree:

$$\hat{\rho}_{k,i}^*(x) = \sum_{\alpha=0}^{\beta} c_\alpha \, x^\alpha, \beta \in [0,2,4,\dots]$$

and further by:

for each i'th finite control volume, i = 1 to N:
define a set of coefficients, $c_\alpha$, through the condition:

$$\int_{x_{i+p-1/2}}^{x_{i+p+1/2}} \hat{\rho}_{k,i}^*(x) dx = \hat{\rho}_{k,i+p} \Delta x_{i+p},$$

where $p \in [-\beta/2, \beta/2]$ is an integer number,
and solve the resulting system of equations for the coefficients $c_0$, $c_1$, ..., $c_\beta$ to reconstruct the spatial reconstruction of the mass, $\hat{\rho}_{k,i}^*(x)$, present in the i'th finite control volume as:

$$\hat{\rho}_{k,i}^*(\mathrm{x}) = c_0 + c_1 x + c_2 x^2 + \dots + c_\beta \mathrm{x}^\beta$$

, $\mathrm{x} \in [x_{i-1/2}, x_{i+1/2}]$.

**5.** The autonomous flow management system according to claim 4, wherein the software performs a computer-implemented method where the even degree polynomial is a second order polynomial, $c_0 + c_1 x + c_2 x^2$, and using that:

$$\int_{x_{i-1/2}}^{x_{i+1/2}} c_0 + c_1 x + c_2 x^2 dx = c_0 \Delta x_i + c_1 \bar{x}_i \Delta x_i + c_2 \left( \bar{x}_i^2 \Delta x_i + \frac{1}{12} \Delta x_i^3 \right)$$

to define relations for the i-1'th, the i'th, and the i+1'th finite control volumes, respectively:

$$c_0 \Delta x_{i-1} + c_1 \bar{x}_{i-1} \Delta x_{i-1} + c_2 \left( \bar{x}_{i-1}^2 \Delta x_{i-1} + \frac{1}{12} \Delta x_{i-1}^3 \right) = \hat{\rho}_{k,i-1}$$

$$c_0 \Delta x_i + c_1 \bar{x}_i \Delta x_i + c_2 \left( \bar{x}_i^2 \Delta x_i + \frac{1}{12} \Delta x_i^3 \right) = \hat{\rho}_{k,i}$$

$$c_0 \Delta x_{i+1} + c_1 \bar{x}_{i+1} \Delta x_{i+1} + c_2 \left( \bar{x}_{i+1}^2 \Delta x_{i+1} + \frac{1}{12} \Delta x_{i+1}^3 \right) = \hat{\rho}_{k,i+1}$$

and solving the three second order polynomials to determine the coefficients $c_0$, $c_1$ and $c_2$, and then reconstruct the spatial reconstruction of the mass, $\hat{\rho}_{k,i}^*(x)$, present in the i'th finite control volume as:

$$\hat{\rho}_{k,i}^*(\mathrm{x}) = c_0 + c_1 x + c_2 x^2$$, $\mathrm{x} \in [x_{i-1/2}, x_{i+1/2}]$.

6. The autonomous flow management system according to any of claims 4 or 5, wherein the software performs a computer-implemented method applying the spatially reconstructed mass to estimate a mass flux, $F_{k,j}$, across the j'th internal face by:

$$F_{k,j} = \frac{A_j}{\Delta t_n} \int_{\mathbb{D}_{k,j}} \hat{\rho}_k^*(x) dx$$

where $\hat{\rho}_k^*(x)$ is the reconstruction of the mass of the k'th fluid phase over the whole computational domain, composed of the polynomials $\hat{\rho}_{k,i}^*(x)$ from all cells, integrated over the j'th domain of dependence, $\mathbb{D}_{k,j}$, $\Delta t_n$ is the n'th time step, and $A_j$ is the cross-sectional area at the position of the j'th internal face.

7. The autonomous flow management system according to claim 6, wherein the software performs a computer-implemented method further comprising, when applying an imposed mass flow rate, $F_{in,k}$, into the computational domain, that for each internal face j having a domain of dependence, $\mathbb{D}_{k,j}$ with a starting point, $x_{0,k}^n$, being outside of the computational domain $\mathbb{P}$, the mass flow rate through internal face j is determined as:

$$F_{k,j} = \frac{1}{\Delta t_n} \left( A_j \int_{\mathbb{D}_{k,j} \cap \mathbb{P}} \hat{\rho}_k^*(x) dx + F_{in,k} \Delta t_{r,k} \right)$$

where $\mathbb{D}_{k,j} \cap \mathbb{P}$ denotes the part of the domain of dependence which is within the computational domain.

8. The autonomous flow management system according to claim 6, wherein the software performs a computer-implemented method further comprising, when applying an imposed pressure boundary condition, that for each internal face j having a domain of dependence, $\mathbb{D}_{k,j}$ with a starting point, $x_{0,k}^n$, being outside of the computational domain $\mathbb{P}$, the mass flow rate through internal face j is determined by extrapolating the velocity and applying:

$$x_{s,k}^n = \bar{x}_i + e^{-\Delta C_{k,i}}\left(x_j - \bar{x}_i\right) - \bar{u}_{k,i}\Delta t \begin{cases} 1 - \frac{1}{2}\Delta C_{k,i} & \text{if } |\Delta C_{k,i}| < \sqrt{6\epsilon} \\ \dfrac{(1 - e^{-\Delta C_{k,i}})}{\Delta C_{k,i}} & \text{otherwise} \end{cases}$$

with $\Delta C_{k,i} = 0$, and $\bar{u}_{k,i}$ being the velocity in the first or last finite control volume of the computational domain at the west or east boundary condition, respectively to determine an updated starting position, $x_{s,k}^n$, being outside of the computational domain, and then determining the mass flow rate through the internal face j during time step $\Delta t_n$ by:

$$F_{k,j} = \frac{A_j}{\Delta t_n} \int_{\mathbb{D}_{k,j}} \hat{\rho}_k^*(x)dx$$

in which for the part of the domain of dependence outside the computational domain, it is applied a mass defined as $\hat{\rho}_k^*(x) = \alpha_{k,in}\rho_{k,in}$, where $\alpha_{k,in}$ is the volume fraction of phase k imposed at the internal face j and $\rho_{k,in}$ is a density corresponding to the imposed pressure.

**9.** The autonomous flow management system according to any of claims 4 to 6, wherein the software performs a computer-implemented method further comprising, for each i'th finite control volume, i = 1 to N, a rescaling of the polynomial $\hat{\rho}_{k,i}^*(x)$ to preserve positivity by:

$$\widetilde{\hat{\rho}_{k,i}^*}(x) = \theta\left(\hat{\rho}_{k,i}^*(x) - \hat{\rho}_{k,i}^0\right) + \hat{\rho}_{k,i}^0$$

where $\widetilde{\hat{\rho}_{k,i}^*}$ is the rescaled polynomial for the i'th finite control volume, $\hat{\rho}_{k,i}^0$ is the mass present in the i'th finite control volume at the beginning of the n'th time step, and $\theta = \frac{\hat{\rho}_{k,i}^v}{\hat{\rho}_{k,i}^0 - m}$ if m < 0 or $\theta = 1$ if m ≥ 0, where $m = \min_{x \in [x_{i-1/2}, x_{i+1/2}]} \hat{\rho}_{k,i}^*(x)$, and then applying the rescaled polynomials $\widetilde{\hat{\rho}_{k,i}^*}$ for the i'th finite control volumes, i = 1 to N, in the spatial reconstruction of the mass.

**10.** The autonomous flow management system to any of claim 4 to 7, wherein software performs a computer-implemented method further comprising, for each i'th finite control volume, i = 1 to N, a rescaling of the polynomial $\hat{\rho}_{k,i}^*(x)$ to avoid spurious oscillations at discontinuities and extrema by:

$$\widetilde{\hat{\rho}_{k,i}^*}(x) = \theta\left(\hat{\rho}_{k,i}^*(x) - \hat{\rho}_{k,i}^0\right) + \hat{\rho}_{k,i}^0$$

where $\widetilde{\hat{\rho}_{k,i}^*}$ is the rescaled polynomial for the i'th finite control volume, $\hat{\rho}_{k,i}^0$ is the mass present in the i'th finite control volume at the beginning of the n'th time step, and where

$$\theta = 0, \text{ if } \left(\hat{\rho}_{k,i}^0 > \hat{\rho}_{k,i-1}^0 \text{ and } \hat{\rho}_{k,i}^0 > \hat{\rho}_{k,i+1}^0\right) \text{ or } \left(\hat{\rho}_{k,i}^0 < \hat{\rho}_{k,i-1}^0 \text{ and } \hat{\rho}_{k,i}^0 < \hat{\rho}_{k,i+1}^0\right),$$

or

$$\theta = MIN(\theta_L, \theta_R),$$

where

$$\theta_L = \left|\frac{\hat{\rho}_{k,i-1}^0 - \hat{\rho}_{k,i}^0}{\hat{\rho}_{k,i}^*(x_{i-1/2}) - \hat{\rho}_{k,i}^0}\right| \text{ if either } \begin{cases} \hat{\rho}_{k,i}^0 > \hat{\rho}_{k,i-1}^0 \text{ and } \hat{\rho}_{k,i}^*(x_{i-1/2}) < \hat{\rho}_{k,i-1}^0 \\ \hat{\rho}_{k,i}^0 < \hat{\rho}_{k,i-1}^0 \text{ and } \hat{\rho}_{k,i}^*(x_{i-1/2}) > \hat{\rho}_{k,i-1}^0 \end{cases}.$$

and

$$\theta_R = \left| \frac{\hat{\rho}^0_{k,i+1} - \hat{\rho}^0_{k,i}}{\hat{\rho}^*_{k,i}(x_{i+1/2}) - \hat{\rho}^0_{k,i}} \right| \quad if \ either \ \begin{cases} \hat{\rho}^0_{k,i} > \hat{\rho}^0_{k,i+1} \ and \ \hat{\rho}^*_{k,i}(x_{i+1/2}) < \hat{\rho}^0_{k,i+1} \\ \hat{\rho}^0_{k,i} < \hat{\rho}^0_{k,i+1} \ and \ \hat{\rho}^*_{k,i}(x_{i+1/2}) > \hat{\rho}^0_{k,i+1} \end{cases},$$

and then applying the rescaled polynomials $\widetilde{\hat{\rho}^*_{k,i}}$ for the i'th finite control volumes, i = 1 to N, in the spatial reconstruction of the mass.

11. The autonomous flow management system according to any of claims 9 or 10, wherein the software performs a computer-implemented method further comprising applying a spatially reconstructed mass to estimate a mass flux, $F_{k,j}$, across the j'th internal face by:

$$F_{k,j} = \frac{A_j}{\Delta t_n} \int_{\mathbb{D}_{k,j}} \widetilde{\hat{\rho}^*_k}(x) dx$$

where $\widetilde{\hat{\rho}^*_k}(x)$ is the reconstruction of the mass of the k'th fluid phase over the whole computational domain, composed of the polynomials $\widetilde{\hat{\rho}^*_{k,i}}(x)$ from all cells, which may have been rescaled, integrated over the j'th domain of dependence, $\mathbb{D}_{k,j}$, $\Delta t_n$ is the n'th time step, and $A_j$ is the cross-sectional area at the position of the j'th internal face.

12. The autonomous flow management system according to any preceding claim, wherein the flow management system further comprises a second actuator (62) located at the downstream end (12) of the pipeline-based transport system (10) and/or a third actuator located anywhere in-between the upstream (11) and downstream (12) end of the pipeline-based transport system (10).

13. The autonomous flow management system according to any preceding claim, wherein the control unit (20) is a Distributed Control System, a Programmable Logic Controller, an Edge Gateway, a SCADA system or a Historian System or Timeseries Database being implemented to covering automation layers 0, 1, and 2 according the standard: ANSI/ISA-95.00.01-2010 (IEC 62264-1 Mod) Enterprise-Control System Integration - Part 1: Models and Terminology.

14. The autonomous flow management system according to any preceding claim, wherein the first sensor (51) of the sensor configuration of the flow management system comprises a temperature sensor located at the upstream end (11) of the pipeline-based transport system (10), and:

   either:

   - the first sensor (51) further comprises a pressure sensor and the second sensor (52) comprises a pressure sensor,
   - the first sensor (51) further comprises a pressure sensor and the second sensor (52) comprises a flow sensor,
   - the first sensor (51) further comprises a flow sensor and the second sensor (52) comprises a pressure sensor,

   or

   - the first sensor (51) further comprises a flow sensor and the second sensor (52) comprises a flow sensor.

15. The autonomous flow management system according to any preceding claim, wherein the control unit (20) determines the set point values may by using one or several of the following algorithms: PID control loop, Pre-trained machine learning algorithm, and/or Global or local optimum search algorithm.

16. The autonomous flow management system according to any preceding claim, wherein the actuator (61, 62) of the actuator configuration is either a control valve, a drum separator, a compressor, a gas injector, or a pump.

17. A method for trouble-shooting flow problems during operation of a pipeline-based fluid transportation system for transporting a multiphase fluid, wherein the method comprises applying the computer-implemented method of the flow management system according to anyone of claims 1 to 16 to predict the effect on the fluid behaviour in the transport system from a set of possible mitigation actions, determine which mitigation action which is to be physically implemented on the transport system having flow problems, and implementing the mitigation action by engaging one or more actuators of the actuator configuration.

18. A method for avoiding flow problems during operation of a pipeline-based fluid transportation system for transporting a multiphase fluid, wherein the method comprises applying the computer-implemented method of the flow management system according to anyone of claims 1 to 16 to predict the fluid behaviour in the transport system for a timespan into the future and determine the need for initiating mitigation actions during the timespan to define an operational schedule to be implemented by the actuator(s) of the actuator configuration.

**Patentansprüche**

1. Autonomes Strömungsverwaltungssystem (100) zum Regulieren des Durchflusses eines mehrphasigen Fluids, das eine Anzahl von k Fluidphasen enthält, wobei k eine positive Ganzzahl ist, durch ein pipelinebasiertes Transportsystem (10), umfassend:

    - eine Strömungssimulationseinheit (30),
    - eine Sensorkonfiguration, die mindestens einen ersten Sensor (51), der an einem vorderen Ende (11) angeordnet ist, und einen zweiten Sensor (51), der an einem hinteren Ende (12) des pipelinebasierten Transportsystems (10) angeordnet ist, umfasst und einen oder mehrere charakteristische Strömungsparameter des mehrphasigen Fluids misst, das durch das pipelinebasierte Transportsystem (10) strömt,
    - eine Aktorkonfiguration, die mindestens einen Aktor (61) umfasst, der dazu angepasst ist, den Fluidstrom durch das pipelinebasierte Transportsystem (10) zu regulieren, und
    - eine Steuereinheit (20), die zu Folgendem angepasst ist:
    - Empfangen von Signalen (53, 54) von der Sensorkonfiguration, die einen oder mehrere charakteristische Strömungsparameter misst, und Übertragen der Signale auf eine oder mehrere Randbedingungen (21), die an die Strömungssimulationseinheit (30) weitergeleitet werden, und
    - Empfangen von Simulationsergebnissen (32) von der Strömungssimulationseinheit (30) und Übertragen der Simulationsergebnisse auf Sollwerte (22), die an den/die Aktor(en) (61) der Aktorkonfiguration weitergeleitet werden,
    wobei

        - die Strömungssimulationseinheit (30) einen Computer umfasst, der mit einer Software ausgestattet ist, die bei Ausführung ein computerimplementiertes Verfahren durchführt, das das Fluidverhalten der mehrphasigen Strömung, die in dem pipelinebasierten Transportsystem (10) strömt, mit der/den Randbedingung(en) (21) von der Steuereinheit (20) simuliert, **dadurch gekennzeichnet, dass**

    das computerimplementierte Verfahren Folgendes umfasst:

        Anwenden eines eindimensionalen (1D) numerischen Strömungsmechanik-Modells (CFD-Modells), das die Geometrie des pipelinebasierten Transportsystems und die darin strömende mehrphasige Strömung beschreibt,
        Lösen des 1D CFD-Modells, um das Fluidverhalten der mehrphasigen Strömung zu simulieren, die in dem pipelinebasierten Transportsystem strömt, und Beschreiben des bestimmten Fluidverhaltens als makroskopische Fluideigenschaften, wie etwa Strömungsgeschwindigkeit, Druck, Dichte, Temperatur usw., und das 1D CFD-Modell ein Finites-Volumen-Verfahren anwendet, um das Modell zu lösen, wobei die Geometrie des pipelinebasierten Transportsystems als ein numerischer Bereich definiert ist, der sich entlang einer Achse erstreckt, die durch die kartesische Koordinate x dargestellt ist und in einen Satz von N, wobei N eine positive Ganzzahl ist, sich nicht überlappender finiter Kontrollvolumen unterteilt ist, die durch eine Innenfläche zwischen benachbarten finiten Kontrollvolumen getrennt sind, und wobei

das eindimensionale numerische Strömungsmechanik-Modell dazu angepasst ist, den Massenstrom einer k-ten Fluidphase aus einem i-ten finiten Kontrollvolumen während eines n-ten Zeitschritts zu schätzen, indem ein Polynom angewendet wird, um die Masse, $\hat{\rho_k}(x)$, der k-ten Fluidphase, die in jedem der N finiten Kontrollvolumen des numerischen Bereichs vorhanden ist, räumlich zu rekonstruieren,
und dann
für jede j-te Innenfläche, wobei j E 1/2, ..., N+1/2, des numerischen Bereichs die folgenden Schritte i) und ii) auszuführen:

i) Rekonstruieren der Strömungsgeschwindigkeit, $u_k(x)$, der k-ten Fluidphase in Abhängigkeit von Position x und Anwenden der Rekonstruktion, um einen Abhängigkeitsbereich, $\mathbb{D}_{k,j}$, zu bestimmen, der die Strecke darstellt, welche die k-te Fluidphase während des n-ten Zeitschritts zurückgelegt hat, und

ii) Addieren der räumlich rekonstruierte Masse, die in dem Abhängigkeitsbereich, $\mathbb{D}_{k,j}$, vorhanden ist, und Annehmen, dass die addierte Masse durch die j-te Innenfläche über den n-ten Zeitschritt in das i-te finite Kontrollvolumen übergeht, wenn $u_k(x_j) < 0$, oder in das i+1-te finite Kontrollvolumen übergeht, wenn $u_k(x_j) > 0$, wobei $u_k(x_j)$ die Strömungsgeschwindigkeit an der j-ten Innenfläche ist.

2. Autonomes Strömungsverwaltungssystem nach Anspruch 1, wobei die Software ein computerimplementiertes Verfahren durchführt, wobei das CFD-Modell ein explizites numerisches Lösungsschema anwendet.

3. Autonomes Strömungsverwaltungssystem nach Anspruch 1 oder 2, wobei die Software ein computerimplementiertes Verfahren durchführt, das ferner Bestimmen des Abhängigkeitsbereichs für das i-te finite Kontrollvolumen $\mathbb{D}_{k,j}$ umfasst, indem die folgenden Schritte i) bis vii) ausgeführt werden:

i)

wenn $u_{k,j} > 0$:
Festlegen eines Upwind-Zellenindex i = j-1/2 und eines Richtungsindex s = -1,
wenn $u_{k,j} < 0$:
Festlegen eines Upwind-Zellenindex i = j+1/2 und eines Richtungsindex s = 1,

ii) Festlegen eines Zellenzählers m = 0,
iii) Festlegen von $\Delta t_r$ gleich dem gesamten Zeitschritt $\Delta t$,

iv) wenn $\left| r_{k,i+sm} - 1 \right| < 2\sqrt{3\epsilon}$ : Festlegen von

$$\Delta t_{c,k,i+sm} = \frac{\Delta x_{i+sm}}{\overline{u}_{,i+sm}},$$

ansonsten: Festlegen von

$$\Delta t_{c,k,i+sm} = \frac{\Delta x_{i+sm}}{\overline{u}_{,i+sm}} \left( \frac{r_{k,i+sm}+1}{2} \frac{ln(r_{k,i+sm})}{(r_{k,i+sm}-1)} \right),$$

wobei

$$r_{k,i+sm} = \frac{u_{k,i+sm+1/2}}{u_{k,i+sm-1/2}},$$

und $\varepsilon$ eine positive reelle Zahl ist, die durch Ausführen einer computerimplementierten EPSILON-Funktion in Fortran erlangt wird,

v)

wenn $\Delta t_{c,k,i+sm} > \Delta t_r$: weiter bei Schritt vi),
oder andernfalls, wenn i+s(m+1)<1 oder i+s(m+1)>N: Festlegen von $\Delta t_r = \Delta t_r - \Delta t_{c,k,i+sm}$ und Beenden des Vorgangs,
oder ansonsten: Festlegen von m = m + 1 und $\Delta t_r = \Delta t_r - \Delta t_{c,k,i+sm}$ und weiter bei Schritt iv),

vi) wenn $|\Delta C_{k.i+sm}| < \sqrt{6\epsilon}$ :

Bestimmen einer charakteristischen Ausgangsposition, $x_{0,k}^n$ , durch Lösen der folgenden Gleichung;

$$x_{0,k}^n = \bar{x}_{i+sm} + e^{-\Delta C_{k,i+sm}}\left(x_{j+sm} - \bar{x}_{i+sm}\right) - \bar{u}_{k,i+sm}\Delta t_r \left(1 - \frac{1}{2}\Delta C_{k,i+sm}\right),$$

und weiter bei Schritt vii),
Ansonsten:

Bestimmen einer charakteristischen Ausgangsposition, $x_{0,k}^n$ , durch Lösen der folgenden Gleichung;

$$x_{0,k}^n = \bar{x}_{i+sm} + e^{-\Delta C_{k,i+sm}}\left(x_{j+sm} - \bar{x}_{i+sm}\right) - \bar{u}_{k,i+sm}\Delta t_r \left(\frac{\left(1 - e^{-\Delta C_{k,i+sm}}\right)}{\Delta C_{k,i+sm}}\right),$$

und weiter bei Schritt vii),
wobei

$$\bar{x}_{i+sm} = \frac{x_{i+sm+1/2} + x_{i+sm-1/2}}{2},$$

$$\bar{u}_{k,i+sm} = \frac{u_{k,i+sm-1/2} + u_{k,i+sm+1/2}}{2},$$

$$\Delta x_{i+sm} = x_{i+sm+1/2} - x_{i+sm-1/2},$$

$$\Delta u_{k,i+sm} = u_{k,i+sm+1/2} - u_{k,i+sm-1/2},$$

$$\Delta C_{k,i+sm} = \Delta u_{k,i+sm}\frac{\Delta t}{\Delta x_{i+sm}},$$

und
vii) wenn $u_{k,j} > 0$:

Festlegen von

$$\mathbb{D}_{k,j} = \left[x_{0,k}^n, x_j\right],$$

oder wenn $u_{k,j} < 0$:

Festlegen von

$$\mathbb{D}_{k,j} = \left[ x_j, x_{0,k}^n \right]$$

.

**4.** Autonomes Strömungsverwaltungssystem nach Anspruch 3, wobei die Software ein computerimplementiertes Verfahren durchführt, das ferner Erlangen der räumlichen Rekonstruktion über den gesamten Bereich der Masse,

$\hat{\rho}_k^*(x)$ , der k-ten Fluidphase umfasst, die in jedem der N finiten Kontrollvolumen des numerischen Bereichs vorhanden ist, und zwar durch:

Anwenden, in jeder Zelle, eines Polynoms geraden Grads:

$$\hat{\rho}_{k,i}^*(x) = \sum_{\alpha=0}^{\beta} c_\alpha x^\alpha, \beta \in [0,2,4,\dots]$$

und ferner durch:
für jedes i-te finite Kontrollvolumen i = 1 bis N:

Definieren eines Satzes von Koeffizienten, $c_\alpha$, durch die Bedingung:

$$\int_{x_{i+p-1/2}}^{x_{i+p+1/2}} \hat{\rho}_{k,i}^*(x) dx = \hat{\rho}_{k,i+p} \Delta x_{i+p},$$

wobei $p \in [-\beta/2, \beta/2]$ eine ganze Zahl ist,
und Lösen des resultierenden Gleichungssystems für die Koeffizienten $c_0$, $c_1$, ..., $c_\beta$,

um die räumliche Rekonstruktion der Masse $\hat{\rho}_{k,i}^*(x)$ , zu rekonstruieren, die in dem i-ten finiten Kontrollvolumen vorhanden ist als:

$$\hat{\rho}_{k,i}^*(\mathrm{x}) = c_0 + c_1 x + c_2 x^2 + \dots + c_\beta \mathrm{x}^\beta, \quad \mathrm{x} \in [\mathrm{x}_{i-1/2}, \mathrm{x}_{i+1/2}].$$

**5.** Autonomes Strömungsverwaltungssystem nach Anspruch 4, wobei die Software ein computerimplementiertes Verfahren durchführt, wobei das Polynom geraden Grades ein Polynom zweiter Ordnung ist, $c_0 + c_1 x + c_2 x^2$,, und Verwenden, dass:

$$\int_{x_{i-1/2}}^{x_{i+1/2}} c_0 + c_1 x + c_2 x^2 dx = c_0 \Delta x_i + c_1 \bar{x}_i \Delta x_i + c_2 \left( \bar{x}_i^2 \Delta x_i + \frac{1}{12} \Delta x_i^3 \right)$$

um Beziehungen für das i-1-te, das i-te bzw. das i+1-te finite Kontrollvolumen zu definieren:

$$c_0 \Delta x_{i-1} + c_1 \bar{x}_{i-1} \Delta x_{i-1} + c_2 \left( \bar{x}_{i-1}^2 \Delta x_{i-1} + \frac{1}{12} \Delta x_{i-1}^3 \right) = \hat{\rho}_{k,i-1}$$

$$c_0 \Delta x_i + c_1 \bar{x}_i \Delta x_i + c_2 \left( \bar{x}_i^2 \Delta x_i + \frac{1}{12} \Delta x_i^3 \right) = \hat{\rho}_{k,i}$$

$$c_0 \Delta x_{i+1} + c_1 \bar{x}_{i+1} \Delta x_{i+1} + c_2 \left( \bar{x}_{i+1}^2 \Delta x_{i+1} + \frac{1}{12} \Delta x_{i+1}^3 \right) = \hat{\rho}_{k,i+1}$$

und Lösen der drei Polynome zweiter Ordnung, um die Koeffizienten $c_0$, $c_1$ und $c_2$ zu bestimmen, und dann Rekonstruieren der räumlichen Rekonstruktion der Masse, $\hat{\rho}_{k,i}^*(x)$, die in dem i-ten finiten Kontrollvolumen vorhanden ist als:

$$\hat{\rho}_{k,i}^*(x) = c_0 + c_1 x + c_2 x^2, \quad x \in [x_{i-1/2}, x_{i+1/2}].$$

6. Autonomes Strömungsverwaltungssystem nach einem der Ansprüche 4 oder 5, wobei die Software ein computerimplementiertes Verfahren durchführt, bei dem die räumlich rekonstruierte Masse angewendet wird, um einen Massenfluss, $F_{k,j}$, über die j-te Innenfläche zu schätzen durch:

$$F_{k,j} = \frac{A_j}{\Delta t_n} \int_{\mathbb{D}_{k,j}} \hat{\rho}_k^*(x) dx$$

wobei $\hat{\rho}_k^*(x)$ die Rekonstruktion der Masse der k-ten Fluidphase über den gesamten numerischen Bereich ist, der aus den Polynomen $\hat{\rho}_{k,i}^*(x)$ aus allen Zellen, die über den j-ten Abhängigkeitsbereich, $\mathbb{D}_{k,j}$, integriert sind, zusammengesetzt ist, $\Delta t_n$ der n-te Zeitschritt ist und $A_j$ die Querschnittsfläche an der Position der j-ten Innenfläche ist.

7. Autonomes Strömungsverwaltungssystem nach Anspruch 6, wobei die Software ein computerimplementiertes Verfahren durchführt, ferner umfassend, wenn ein vorgeschriebener Massendurchfluss, $F_{in,k}$, in den numerischen Bereich angewendet wird, dass für jede Innenfläche j, die einen Abhängigkeitsbereich, $\mathbb{D}_{k,j}$, mit einem Ausgangspunkt, $x_{0,k}^n$, aufweist, der außerhalb des numerischen Bereichs $\mathbb{P}$ liegt, der Massendurchfluss durch die Innenfläche j bestimmt wird als:

$$F_{k,j} = \frac{1}{\Delta t_n} \left( A_j \int_{\mathbb{D}_{k,j} \cap \mathbb{P}} \hat{\rho}_k^*(x) dx + F_{in,k} \Delta t_{r,k} \right)$$

wobei $\mathbb{D}_{k,j} \cap \mathbb{P}$ den Teil des Abhängigkeitsbereichs bezeichnet, der sich innerhalb des numerischen Bereichs befindet.

8. Autonomes Strömungsverwaltungssystem nach Anspruch 6, wobei die Software ein computerimplementiertes Verfahren durchführt, ferner umfassend, wenn eine vorgeschriebene Druckbegrenzungsbedingung angewendet wird, dass für jede Innenfläche j, die einen Abhängigkeitsbereich, $\mathbb{D}_{k,j}$, mit einem Ausgangspunkt, $x_{0,k}^n$, aufweist, der außerhalb des numerischen Bereichs $\mathbb{P}$ liegt, der Massendurchfluss durch die Innenfläche j bestimmt wird durch Extrapolieren der Geschwindigkeit und Anwenden von:

$$x_{s,k}^n = \bar{x}_i + e^{-\Delta C_{k,i}}(x_j - \bar{x}_i) - \bar{u}_{k,i}\Delta t \begin{cases} 1 - \frac{1}{2}\Delta C_{k,i} \\ \dfrac{(1 - e^{-\Delta C_{k,i}})}{\Delta C_{k,i}} \end{cases}$$

wenn $|\Delta C_{k,i}| < \sqrt{6\epsilon}$ ansonsten

wobei $\Delta C_{k,i} = 0$ und $\bar{u}_{k,i}$ die Geschwindigkeit in dem ersten oder dem letzten finiten Kontrollvolumen des numerischen Bereichs an der westlichen bzw. östlichen Randbedingung ist, um eine aktualisierte Ausgangsposition,

$x_{s,k}^n$ , zu bestimmen, die außerhalb des numerischen Bereichs liegt, und anschließend Bestimmen des Massendurchflusses durch die Innenfläche j während eines Zeitschritts $\Delta t_n$ durch:

$$F_{k,j} = \frac{A_j}{\Delta t_n} \int_{\mathbb{D}_{k,j}} \hat{\rho}_k^*(x)dx$$

worin für den Teil des Abhängigkeitsbereichs außerhalb des numerischen Bereichs eine Masse angewendet wird, die definiert ist als

$\hat{\rho}_k^*(x) = \alpha_{k,in}\rho_{k,in}$ , wobei $\alpha_{k,in}$ der Volumenanteil von Phase k ist, der an der Innenfläche j vorgeschrieben ist, und $p_{k,in}$ eine Dichte ist, die dem vorgeschriebenen Druck entspricht.

9.  Autonomes Strömungsverwaltungssystem nach einem der Ansprüche 4 bis 6, wobei die Software ein computerimplementiertes Verfahren durchführt, das ferner für jedes i-te finite Kontrollvolumen, i = 1 bis N, eine Neuskalierung des Polynoms $\hat{\rho}_{k,i}^*(x)$ umfasst, um Positivität zu bewahren durch:

$$\widetilde{\hat{\rho}_{k,i}^*}(x) = \theta\left(\hat{\rho}_{k,i}^*(x) - \hat{\rho}_{k,i}^0\right) + \hat{\rho}_{k,i}^0$$

wobei

$\widetilde{\hat{\rho}_{k,i}^*}$ das neuskalierte Polynom für das i-te finite Kontrollvolumen ist,

$\hat{\rho}_{k,i}^0$ die Masse ist, die in dem i-ten finiten Kontrollvolumen zu Beginn des n-ten Zeitschritts vorhanden ist, und

$\theta = \dfrac{\hat{\rho}_{k,i}^0}{\hat{\rho}_{k,i}^0 - m}$ wenn m < 0 oder $\theta$ = 1, wenn m ≥ 0, wobei $m = \min\limits_{x \in [x_{i-1/2}, x_{i+1/2}]} \hat{\rho}_{k,i}^*(x)$ und dann

Anwenden der neuskalierten Polynome $\widetilde{\hat{\rho}_{k,i}^*}$ für die i-ten finiten Kontrollvolumen, i = 1 bis N, bei der räumlichen Rekonstruktion der Masse.

10. Autonomes Strömungsverwaltungssystem nach einem der Ansprüche 4 bis 7, wobei die Software ein computerimplementiertes Verfahren durchführt, das ferner für jedes i-te finite Kontrollvolumen, i = 1 bis N, eine Neuskalierung des Polynoms $\hat{\rho}_{k,i}^*(x)$ umfasst, um Störschwingungen bei Unterbrechungen und Extrema zu vermeiden durch:

$$\widetilde{\hat{\rho}_{k,i}^*}(x) = \theta\left(\hat{\rho}_{k,i}^*(x) - \hat{\rho}_{k,i}^0\right) + \hat{\rho}_{k,i}^0$$

wobei

$\widetilde{\hat{\rho}^*_{k,i}}$ das neuskalierte Polynom für das i-te finite Kontrollvolumen ist,

$\hat{\rho}^0_{k,i}$ die Masse ist, die in dem i-ten finiten Kontrollvolumen zu Beginn des n-ten Zeitschritts vorhanden ist,

und wobei

$\theta = 0$, wenn ( $\hat{\rho}^0_{k,i} > \hat{\rho}^0_{k,i-1}$ und $\hat{\rho}^0_{k,i} > \hat{\rho}^0_{k,i+1}$ ) oder

$$\left( \hat{\rho}^0_{k,i} < \hat{\rho}^0_{k,i-1} \text{ and } \hat{\rho}^0_{k,i} < \hat{\rho}^0_{k,i+1} \right),$$

oder

$$\theta = MIN(\theta_L, \theta_R),$$

wobei

$$\theta_L = \left| \frac{\hat{\rho}^0_{k,i-1} - \hat{\rho}^0_{k,i}}{\hat{\rho}^*_{k,i}(x_{i-1/2}) - \hat{\rho}^0_{k,i}} \right| \quad \text{wenn entweder} \quad \begin{cases} \hat{\rho}^0_{k,i} > \hat{\rho}^0_{k,i-1} \text{ and } \hat{\rho}^*_{k,i}(x_{i-1/2}) < \hat{\rho}^0_{k,i-1} \\ \hat{\rho}^0_{k,i} < \hat{\rho}^0_{k,i-1} \text{ and } \hat{\rho}^*_{k,i}(x_{i-1/2}) > \hat{\rho}^0_{k,i-1} \end{cases}$$

und

$$\theta_R = \left| \frac{\hat{\rho}^0_{k,i+1} - \hat{\rho}^0_{k,i}}{\hat{\rho}^*_{k,i}(x_{i+1/2}) - \hat{\rho}^0_{k,i}} \right| \quad \text{wenn entweder} \quad \begin{cases} \hat{\rho}^0_{k,i} > \hat{\rho}^0_{k,i+1} \text{ and } \hat{\rho}^*_{k,i}(x_{i+1/2}) < \hat{\rho}^0_{k,i+1} \\ \hat{\rho}^0_{k,i} < \hat{\rho}^0_{k,i+1} \text{ and } \hat{\rho}^*_{k,i}(x_{i+1/2}) > \hat{\rho}^0_{k,i+1} \end{cases}$$

und dann Anwenden der neuskalierten Polynome $\widetilde{\hat{\rho}^*_{k,i}}$ für die i-ten finiten Kontrollvolumen, i = 1 bis N, bei der räumlichen Rekonstruktion der Masse.

11. Autonomes Strömungsverwaltungssystem nach einem der Ansprüche 9 oder 10, wobei die Software ein computerimplementiertes Verfahren durchführt, ferner umfassend Anwenden einer räumlich rekonstruierten Masse, um einen Massenfluss, $F_{k,j}$, über die j-te Innenfläche zu schätzen durch:

$$F_{k,j} = \frac{A_j}{\Delta t_n} \int_{\mathbb{D}_{k,j}} \widetilde{\hat{\rho}^*_k}(x) dx$$

wobei $\widetilde{\hat{\rho}^*_k}(x)$ die Rekonstruktion der Masse der k-ten Fluidphase über den gesamten numerischen Bereich ist, bestehend aus den Polynomen $\widetilde{\hat{\rho}^*_{k,i}}(x)$ aus allen Zellen, die möglicherweise neu skaliert wurden, integriert über den j-ten Abhängigkeitsbereich, $\mathbb{D}_{k,j}$, $\Delta t_n$ der n-te Zeitschritt ist und $A_j$ die Querschnittsfläche an der Position der j-ten Innenfläche ist.

12. Autonomes Strömungsverwaltungssystem nach einem der vorhergehenden Ansprüche, wobei das Strömungsverwaltungssystem ferner einen zweiten Aktor (62), der sich an dem hinteren Ende (12) des pipelinebasierten Transportsystems (10) befindet, und/oder einen dritten Aktor, der sich an einer beliebigen Stelle zwischen dem vorderen (11) und dem hinteren (12) Ende des pipelinebasierten Transportsystems (10) befindet, umfasst.

13. Autonomes Strömungsverwaltungssystem nach einem der vorhergehenden Ansprüche, wobei die Steuereinheit (20) ein verteiltes Steuerungssystem, eine speicherprogrammierbare Steuerung, ein Edge-Gateway, ein SCADA-System oder ein Historian-System oder eine Zeitreihendatenbank ist, das bzw. die implementiert ist, um Automatisierungsschichten 0, 1 und 2 gemäß der Norm: ANSI/ISA-95.00.01-2010 (IEC 62264-1 Mod) Enterprise-Control System Integration - Part 1: Models and Terminology abzudecken.

14. Autonomes Strömungsverwaltungssystem nach einem der vorhergehenden Ansprüche, wobei der erste Sensor (51) der Sensorkonfiguration des Strömungsverwaltungssystems einen Temperatursensor umfasst, der sich an dem vorderen Ende (11) des pipelinebasierten Transportsystems (10) befindet, und:

> entweder:

>> - der erste Sensor (51) ferner einen Drucksensor umfasst und der zweite Sensor (52) einen Drucksensor umfasst,
>> - der erste Sensor (51) ferner einen Drucksensor umfasst und der zweite Sensor (52) einen Strömungssensor umfasst,
>> - der erste Sensor (51) ferner einen Strömungssensor umfasst und der zweite Sensor (52) einen Drucksensor umfasst,

> oder

>> - der erste Sensor (51) ferner einen Strömungssensor umfasst und der zweite Sensor (52) einen Strömungssensor umfasst.

15. Autonomes Strömungsverwaltungssystem nach einem der vorhergehenden Ansprüche, wobei die Steuereinheit (20) die Sollwerte unter Verwendung von einem oder mehreren der folgenden Algorithmen bestimmen kann: PID-Regelkreis, vortrainierter maschinenlernender Algorithmus und/oder globaler oder lokaler optimaler Suchalgorithmus.

16. Autonomes Strömungsverwaltungssystem nach einem der vorhergehenden Ansprüche, wobei der Aktor (61, 62) der Aktorkonfiguration entweder ein Steuerventil, ein Trommelabscheider, ein Kompressor, eine Gaseinspritzvorrichtung oder eine Pumpe ist.

17. Verfahren zum Beheben von Strömungsproblemen während des Betriebs eines pipelinebasierten Fluidtransportsystems zum Transportieren eines mehrphasigen Fluids, wobei das Verfahren Anwenden des computerimplementierten Verfahrens des Strömungsverwaltungssystems nach einem der Ansprüche 1 bis 16 umfasst, um die Wirkung auf das Fluidverhalten in dem Transportsystem aus einem Satz von möglichen Abhilfemaßnahmen vorherzusagen, zu bestimmen, welche Abhilfemaßnahme an dem Transportsystem, das Strömungsprobleme aufweist, physikalisch umzusetzen ist, und die Abhilfemaßnahme durch Betätigen eines oder mehrerer Aktoren der Aktorkonfiguration umzusetzen.

18. Verfahren zum Verhindern von Strömungsproblemen während des Betriebs eines pipelinebasierten Fluidtransportsystems zum Transportieren eines mehrphasigen Fluids, wobei das Verfahren Anwenden des computerimplementierten Verfahrens des Strömungsverwaltungssystems nach einem der Ansprüche 1 bis 16 umfasst, um das Fluidverhalten in dem Transportsystem für eine Zeitspanne in die Zukunft vorherzusagen und die Notwendigkeit des Einleitens von Abhilfemaßnahmen während der Zeitspanne zu bestimmen, um einen Betriebsplan zu definieren, der von dem/den Aktor(en) der Aktorkonfiguration umzusetzen ist.

**Revendications**

1. Système autonome de gestion d'écoulement (100) pour la régulation de l'écoulement traversant d'un fluide à phases multiples contenant un nombre de k, où k est un nombre entier positif, phases de fluide, à travers un système de transport par pipeline (10), comprenant :

> - une unité de simulation d'écoulement (30),

- une configuration de capteurs comprenant au moins un premier capteur (51) situé à une extrémité amont (11) et un deuxième capteur (51) situé à une extrémité aval (12) du système de transport par pipeline (10) et mesurant un ou plusieurs paramètre(s) d'écoulement caractéristique(s) du fluide à phases multiples s'écoulant à travers le système de transport par pipeline (10),
- une configuration d'actionneurs comprenant au moins un actionneur (61) adapté pour réguler l'écoulement de fluide à travers le système de transport par pipeline (10), et
- une unité de commande (20) adaptée pour :

> - recevoir des signaux (53, 54) provenant de la configuration de capteurs mesurant un ou plusieurs paramètre(s) d'écoulement caractéristique(s) et le transfert des signaux à une ou plusieurs conditions aux limites (21) communiquées à l'unité de simulation d'écoulement (30), et
> - recevoir des résultats de simulation (32) provenant de l'unité de simulation d'écoulement (30) et le transfert des résultats de simulation à des valeurs de consigne (22) communiquées à l'actionneur ou aux actionneurs (61) de la configuration d'actionneurs,

dans lequel
- l'unité de simulation d'écoulement (30) comprend un ordinateur dans lequel est chargé un logiciel, qui, lors de son exécution, réalise un procédé mis en oeuvre par ordinateur simulant le comportement du fluide de l'écoulement à phases multiples s'écoulant dans le système de transport par pipeline (10) avec la ou les condition(s) aux limites (21) provenant de l'unité de commande (20), **caractérisé en ce que** le procédé mis en oeuvre par ordinateur comprend :

> l'application d'un modèle de mécanique des fluides numérique (CFD) unidimensionnel (1D) décrivant la géométrie du système de transport par pipeline et l'écoulement à phases multiples s'écoulant dans celui-ci, la résolution du modèle de CFD 1D pour simuler le comportement du fluide de l'écoulement à phases multiples s'écoulant dans le système de transport par pipeline et décrivant le comportement du fluide déterminé par des propriétés macroscopiques du fluide telles que la vitesse, la pression, la densité, la température, etc., de l'écoulement, et
> le modèle de CFD 1D applique une méthode des volumes finis pour résoudre le modèle, dans lequel la géométrie du système de transport par pipeline est définie comme un domaine numérique s'étendant le long d'un axe représenté par la coordonnée cartésienne x et qui est divisé en un ensemble de N, où N est un nombre entier positif, volumes de contrôle finis non superposés séparés par une face interne entre volumes de contrôle finis adjacents,
> et dans lequel
> le modèle de mécanique des fluides numérique unidimensionnel est adapté pour estimer le débit massique d'une k-ième phase de fluide issue d'un i-ième volume de contrôle fini pendant un n-ième pas temporel par l'application d'un polynôme pour reconstruire spatialement la masse, $\rho_k(x)$, de la k-ième phase de fluide qui est présente dans chacun des N volumes de contrôle finis du domaine numérique,
> et ensuite
> pour chaque j-ième face interne, où $j \in 1/2, ..., N+1/2$, du domaine numérique, exécuter les étapes i) et ii) suivantes :

> > i) reconstruire la vitesse d'écoulement, $u_k(x)$, de la k-ième phase de fluide en fonction de la position x

> > et appliquer la reconstruction pour déterminer un domaine de dépendance, $\mathbb{D}_{k,j}$, représentant la distance que la k-ième phase de fluide a parcouru pendant le n-ième pas temporel, et
> > ii) calculer la somme de la masse spatialement reconstruite qui est présente dans le domaine de dépendance, $\mathbb{D}_{k,j}$, et supposer que la masse dont la somme a été calculée traverse la j-ième face interne pendant le n-ième pas temporel, jusque dans le i-ième volume de contrôle fini lorsque $u_k(x_j) < 0$ ou jusque dans le i+1-ième volume de contrôle fini lorsque $u_k(x_j) > 0$, où $u_k(x_j)$ est la vitesse d'écoulement au niveau de la j-ième face interne.

2. Système autonome de gestion d'écoulement selon la revendication 1, dans lequel le logiciel réalise un procédé mis en oeuvre par ordinateur où le modèle CFD applique un schéma de solution chiffrée explicite.

3. Système autonome de gestion d'écoulement selon la revendication 1 ou 2, dans lequel le logiciel réalise un procédé mis en oeuvre par ordinateur comprenant en outre la détermination du domaine de dépendance pour le i-ième volume de contrôle fini, $\mathbb{D}_{k,j}$ par l'exécution des étapes i) à vii) suivantes :

i) si $u_{k,j} > 0$ :
définir un indice de cellule amont i = j-1/2 et un indice de direction s = -1, si $u_{k,j} < 0$ :
définir un indice de cellule amont i = j+1/2 et un indice de direction s = 1,
ii) définir un compteur de cellules m = 0,
iii) définir $\Delta t_r$ égal au pas temporel complet $\Delta t$,

iv) si $\left| r_{k,i+sm} - 1 \right| < 2\sqrt{3\epsilon}$ :

définir
$$\Delta t_{c,k,i+sm} = \frac{\Delta x_{i+sm}}{\bar{u}_{k,i+sm}} ,$$

dans le cas contraire :

définir
$$\Delta t_{c,k,i+sm} = \frac{\Delta x_{i+sm}}{\bar{u}_{k,i+sm}} \left( \frac{r_{k,i+sm}+1}{2} \frac{ln(r_{k,i+sm})}{(r_{k,i+sm}-1)} \right) , \text{ où}$$

$$r_{k,i+sm} = \frac{u_{k,i+sm+1/2}}{u_{k,i+sm-1/2}} ,$$

et

E est un nombre réel positif obtenu par l'exécution d'une fonction Fortran EPSILON mise en oeuvre par ordinateur,

v) si $\Delta t_{c,k,i+sm} > \Delta t_r$ :

aller à l'étape vi),
sinon si i+s(m+1) < 1 ou i+s(m+1) > N :
définir $\Delta t_r = \Delta t_r - \Delta t_{c,k,i+sm}$, et mettre fin à la procédure, sinon :
définir m = m + 1 et $\Delta t_r = \Delta t_r - \Delta t_{c,k,i+sm}$, et aller à l'étape iv),

vi) si $\left| \Delta C_{k,i+sm} \right| < \sqrt{6\epsilon}$ :

déterminer une position de départ caractéristique, $x^n_{0,k}$, par la résolution de l'équation suivante ;

$$x^n_{0,k} = \bar{x}_{i+sm} + e^{-\Delta C_{k,i+sm}}\left( x_{j+sm} - \bar{x}_{i+sm} \right) - \bar{u}_{k,i+sm}\Delta t_r \left( 1 - \frac{1}{2}\Delta C_{k,i+sm} \right) ,$$

et
aller à l'étape vii),
dans le cas contraire :

déterminer une position de départ caractéristique, $x^n_{0,k}$, par la résolution de l'équation suivante ;

$$x^n_{0,k} = \bar{x}_{i+sm} + e^{-\Delta C_{k,i+sm}}\left( x_{j+sm} - \bar{x}_{i+sm} \right) - \bar{u}_{k,i+sm}\Delta t_r \left( \frac{\left( 1-e^{-\Delta C_{k,i+sm}} \right)}{\Delta C_{k,i+sm}} \right) ,$$

et
aller à l'étape vii),
où

$$\bar{x}_{i+sm} = \frac{x_{i+sm+1/2} + x_{i+sm-1/2}}{2},$$

$$\bar{u}_{k,i+sm} = \frac{u_{k,i+sm-1/2} + u_{k,i+sm+1/2}}{2},$$

$$\Delta x_{i+sm} = x_{i+sm+1/2} - x_{i+sm-1/2},$$

$$\Delta u_{k,i+sm} = u_{k,i+sm+1/2} - u_{k,i+sm-1/2},$$

$$\Delta C_{k,i+sm} = \Delta u_{k,i+sm} \frac{\Delta t}{\Delta x_{i+sm}},$$

et

vii) si $u_{k,j} > 0$ :

définir $\mathbb{D}_{k,j} = \left[ x_{0,k}^n, x_j \right]$,

ou si $u_{k,i} < 0$ :

définir $\mathbb{D}_{k,j} = \left[ x_j, x_{0,k}^n \right]$.

4. Système autonome de gestion d'écoulement selon la revendication 3, dans lequel le logiciel réalise un procédé mis en oeuvre par ordinateur comprenant en outre l'obtention de la reconstruction spatiale sur la totalité du domaine de la masse, $\hat{\rho}_k^*(x)$, de la k-ième phase de fluide qui est présente dans chacun des N volumes de contrôle finis du domaine numérique par :

l'application, dans chaque cellule, d'un polynôme de degré pair, de :

$$\hat{\rho}_{k,i}^*(x) = \sum_{\alpha=0}^{\beta} c_\alpha x^\alpha, \beta \in [0,2,4,\ldots]$$

et en outre par :
pour chaque i-ième volume de contrôle fini, i = 1 à N :

définir un jeu de coefficients, $c_\alpha$, par le biais de la condition :

$$\int_{x_{i+p-1/2}}^{x_{i+p+1/2}} \hat{\rho}_{k,i}^*(x)dx = \hat{\rho}_{k,i+p} \Delta x_{i+p},$$

où $p \in [-\beta/2, \beta/2]$ est un nombre entier,
et résoudre le système d'équations résultant pour les coefficients $c_0, c_1,\ldots, c_\beta$ pour reconstruire la reconstruction spatiale de la masse, $\hat{\rho}_{k,i}^*(x)$, présente dans le i-ième volume de contrôle fini comme étant :

$$\hat{\rho}_{k,i}^*(x) = c_0 + c_1 x + c_2 x^2 + \ldots + c_\beta x^\beta, \quad x \in [x_{i-1/2}, x_{i+1/2}].$$

**5.** Système autonome de gestion d'écoulement selon la revendication 4, dans lequel le logiciel réalise un procédé mis en oeuvre par ordinateur où le polynôme de degré pair est un polynôme du deuxième ordre, $c_0 + c_1x + c_2x^2$, et à l'aide de celui-ci :

$$\int_{x_{i-1/2}}^{x_{i+1/2}} c_0 + c_1 x + c_2 x^2 \, dx = c_0 \Delta x_i + c_1 \bar{x}_i \Delta x_i + c_2 \left( \bar{x}_i^2 \Delta x_i + \frac{1}{12} \Delta x_i^3 \right)$$

pour définir des relations pour les i-1-ième, i-ième et i+1-ième volumes de contrôle finis, respectivement :

$$c_0 \Delta x_{i-1} + c_1 \bar{x}_{i-1} \Delta x_{i-1} + c_2 \left( \bar{x}_{i-1}^2 \Delta x_{i-1} + \frac{1}{12} \Delta x_{i-1}^3 \right) = \hat{\rho}_{k,i-1}$$

$$c_0 \Delta x_i + c_1 \bar{x}_i \Delta x_i + c_2 \left( \bar{x}_i^2 \Delta x_i + \frac{1}{12} \Delta x_i^3 \right) = \hat{\rho}_{k,i}$$

$$c_0 \Delta x_{i+1} + c_1 \bar{x}_{i+1} \Delta x_{i+1} + c_2 \left( \bar{x}_{i+1}^2 \Delta x_{i+1} + \frac{1}{12} \Delta x_{i+1}^3 \right) = \hat{\rho}_{k,i+1}$$

et la résolution des trois polynômes du deuxième ordre pour déterminer les coefficients $c_0$, $c_1$, et $c_2$, et ensuite reconstruire la reconstruction spatiale de la masse, $\hat{\rho}_{k,i}^*(x)$, présente dans le i-ième volume de contrôle fini comme étant :

$$\hat{\rho}_{k,i}^*(x) = c_0 + c_1 x + c_2 x^2, \quad x \in [x_{i-1/2}, x_{i+1/2}].$$

**6.** Système autonome de gestion d'écoulement selon l'une quelconque des revendications 4 ou 5, dans lequel le logiciel réalise un procédé mis en oeuvre par ordinateur appliquant la masse spatialement reconstruite pour estimer un flux de masse, $F_{k,j}$, à travers la j-ième face interne par :

$$F_{k,j} = \frac{A_j}{\Delta t_n} \int_{\mathbb{D}_{k,j}} \hat{\rho}_k^*(x) dx$$

où $\hat{\rho}_k^*(x)$ est la reconstruction de la masse de la k-ième phase de fluide sur la totalité du domaine numérique, composée des polynômes $\hat{\rho}_{k,i}^*(x)$ provenant de toutes les cellules, intégrés sur le j-ième domaine de dépendance, $\mathbb{D}_{k,j}$, $\Delta t_n$ est le n-ième pas temporel, et $A_j$ est l'aire de section transversale à la position de la j-ième face interne.

**7.** Système autonome de gestion d'écoulement selon la revendication 6, dans lequel le logiciel réalise un procédé mis en oeuvre par ordinateur comprenant en outre, lors de l'application d'un débit massique imposé, $F_{in,k}$, dans le domaine numérique, que pour chaque face interne j ayant un domaine de dépendance, $\mathbb{D}_{k,j}$ avec un point de départ, $x_{0,k}^n$, qui est hors du domaine numérique $\mathbb{P}$, le débit massique à travers la face interne j est déterminé comme étant :

$$F_{k,j} = \frac{1}{\Delta t_n} \left( A_j \int\limits_{\mathbb{D}_{k,j} \cap \mathbb{P}} \hat{\rho}_k^*(x) dx + F_{in,k} \Delta t_{r,k} \right)$$

où $\mathbb{D}_{k,j} \cap \mathbb{P}$ représente la partie du domaine de dépendance qui est au sein du domaine numérique.

8. Système autonome de gestion d'écoulement selon la revendication 6, dans lequel le logiciel réalise un procédé mis en oeuvre par ordinateur comprenant en outre, lors de l'application d'une condition aux limites de pression imposée, que pour chaque face interne j ayant un domaine de dépendance, $\mathbb{D}_{k,j}$ avec un point de départ, $x_{0,k}^n$, qui est hors du domaine numérique $\mathbb{P}$, le débit massique à travers la face interne j est déterminé par l'extrapolation de la vitesse et l'application de :

$$x_{s,k}^n = \bar{x}_i + e^{-\Delta C_{k,i}}(x_j - \bar{x}_i) - \bar{u}_{k,i}\Delta t \begin{cases} 1 - \frac{1}{2}\Delta C_{k,i} & \text{si } |\Delta C_{k,i}| < \sqrt{6\epsilon} \\ \dfrac{(1 - e^{-\Delta C_{k,i}})}{\Delta C_{k,i}} & \text{dans le cas contraire} \end{cases}$$

avec $\Delta C_{k,i} = 0$, et $\bar{u}_{k,i}$ étant la vitesse dans le premier ou le dernier volume de contrôle fini du domaine numérique à la condition aux limites ouest ou est, respectivement pour déterminer une position de départ mise à jour, $x_{s,k}^n$, qui est hors du domaine numérique, et ensuite la détermination du débit massique à travers la face interne j pendant un pas temporel $\Delta t_n$ par :

$$F_{k,j} = \frac{A_j}{\Delta t_n} \int\limits_{\mathbb{D}_{k,j}} \hat{\rho}_k^*(x) dx$$

dans lequel pour la partie du domaine de dépendance hors du domaine numérique, est appliquée une masse définie comme étant $\hat{\rho}_k^*(x) = \alpha_{k,in}\rho_{k,in}$, où $\alpha_{k,in}$ est la fraction volumique de la phase k imposée au niveau de la face interne j et $\rho_{k,in}$ est une densité correspondant à la pression imposée.

9. Système autonome de gestion d'écoulement selon l'une quelconque des revendications 4 à 6, dans lequel le logiciel réalise un procédé mis en oeuvre par ordinateur comprenant en outre, pour chaque i-ième volume de contrôle fini, i = 1 à N, un redimensionnement du polynôme $\hat{\rho}_{k,i}^*(\mathrm{x})$ pour préserver la positivité par :

$$\widetilde{\hat{\rho}_{k,i}^*}(\mathrm{x}) = \theta\left(\hat{\rho}_{k,i}^*(\mathrm{x}) - \hat{\rho}_{k,i}^0\right) + \hat{\rho}_{k,i}^0$$

où

$\widetilde{\hat{\rho}_{k,i}^*}$ est le polynôme redimensionné pour le i-ième volume de contrôle fini,

$\hat{\rho}_{k,i}^0$ est la masse présente dans le i-ième volume de contrôle fini au début du n-ième pas temporel, et

$\theta = \dfrac{\hat{\rho}_{k,i}^0}{\hat{\rho}_{k,i}^0 - m}$ si m < 0 ou $\theta = 1$ si m ≥ 0, où $m = \min\limits_{x \in [x_{i-1/2}, x_{i+1/2}]} \hat{\rho}_{k,i}^*(\mathrm{x})$ , et ensuite l'application des polynômes redimensionnés $\widetilde{\hat{\rho}_{k,i}^*}$ pour les i-ièmes volumes de contrôle finis, i = 1 à N, lors de la reconstruction spatiale de la masse.

10. Système autonome de gestion d'écoulement selon l'une quelconque des revendications 4 à 7, dans lequel le logiciel réalise un procédé mis en oeuvre par ordinateur comprenant en outre, pour chaque i-ième volume de contrôle fini, i = 1 à N, un redimensionnement du polynôme $\hat{\rho}^*_{k,i}(x)$ pour éviter des oscillations parasites aux discontinuités et aux extremums par :

$$\widetilde{\hat{\rho}^*_{k,i}}(x) = \theta\left(\hat{\rho}^*_{k,i}(x) - \hat{\rho}^0_{k,i}\right) + \hat{\rho}^0_{k,i}$$

où

$\widetilde{\hat{\rho}^*_{k,i}}$ est le polynôme redimensionné pour le i-ième volume de contrôle fini,

$\hat{\rho}^0_{k,i}$ est la masse présente dans le i-ième volume de contrôle fini au début du n-ième pas temporel, et où

$\theta = 0$, si ( $\hat{\rho}^0_{k,i} > \hat{\rho}^0_{k,i-1}$ et $\hat{\rho}^0_{k,i} > \hat{\rho}^0_{k,i+1}$ ) ou ( $\hat{\rho}^0_{k,i} < \hat{\rho}^0_{k,i-1}$ et $\hat{\rho}^0_{k,i} < \hat{\rho}^0_{k,i+1}$ ), ou
$\theta = MIN(\theta_L, \theta_R)$, où

$$\theta_L = \left|\frac{\hat{\rho}^0_{k,i-1} - \hat{\rho}^0_{k,i}}{\hat{\rho}^*_{k,i}(x_{i-1/2}) - \hat{\rho}^0_{k,i}}\right| \quad \text{si l'un ou l'autre parmi} \quad \begin{cases} \hat{\rho}^0_{k,i} > \hat{\rho}^0_{k,i-1} & \text{et} & \hat{\rho}^*_{k,i}(x_{i-1/2}) < \hat{\rho}^0_{k,i-1} \\ \hat{\rho}^0_{k,i} < \hat{\rho}^0_{k,i-1} & \text{et} & \hat{\rho}^*_{k,i}(x_{i-1/2}) > \hat{\rho}^0_{k,i-1} \end{cases}$$

et

$$\theta_R = \left|\frac{\hat{\rho}^0_{k,i+1} - \hat{\rho}^0_{k,i}}{\hat{\rho}^*_{k,i}(x_{i+1/2}) - \hat{\rho}^0_{k,i}}\right| \quad \text{si l'un ou l'autre parmi} \quad \begin{cases} \hat{\rho}^0_{k,i} > \hat{\rho}^0_{k,i+1} & \text{et} & \hat{\rho}^*_{k,i}(x_{i+1/2}) < \hat{\rho}^0_{k,i+1} \\ \hat{\rho}^0_{k,i} < \hat{\rho}^0_{k,i+1} & \text{et} & \hat{\rho}^*_{k,i}(x_{i+1/2}) > \hat{\rho}^0_{k,i+1} \end{cases}$$

et ensuite l'application des polynômes redimensionnés $\widetilde{\hat{\rho}^*_{k,i}}$ pour les i-ièmes volumes de contrôle finis, i = 1 à N, lors de la reconstruction spatiale de la masse.

11. Système autonome de gestion d'écoulement selon l'une quelconque des revendications 9 ou 10, dans lequel le logiciel réalise un procédé mis en oeuvre par ordinateur comprenant en outre l'application d'une masse spatialement reconstruite pour estimer un flux de masse, $F_{k,j}$, à travers la j-ième face interne par :

$$F_{k,j} = \frac{A_j}{\Delta t_n} \int_{\mathbb{D}_{k,j}} \widetilde{\hat{\rho}^*_k}(x)\,dx$$

où $\widetilde{\hat{\rho}^*_k}(x)$ est la reconstruction de la masse de la k-ième phase de fluide sur la totalité du domaine numérique, composée des polynômes $\widetilde{\hat{\rho}^*_{k,i}}(x)$ provenant de toutes les cellules, qui peuvent avoir été redimensionnés, intégrés sur le j-ième domaine de dépendance, $\mathbb{D}_{k,j}$, $\Delta t_n$ est le n-ième pas temporel, et $A_j$ est l'aire de section transversale à la position de la j-ième face interne.

12. Système autonome de gestion d'écoulement selon une quelconque revendication précédente, dans lequel le système de gestion d'écoulement comprend en outre un deuxième actionneur (62) situé à l'extrémité aval (12) du système de transport par pipeline (10) et/ou un troisième actionneur situé n'importe où entre l'extrémité amont (11) et aval (12) du système de transport par pipeline (10).

**13.** Système autonome de gestion d'écoulement selon une quelconque revendication précédente, dans lequel l'unité de commande (20) est un système de commande distribué, un contrôleur logique programmable, une passerelle périphérique, un système SCADA ou un système d'historique ou une base de données de séries chronologiques qui est mis(e) en oeuvre pour couvrir des couches d'automatisation 0, 1 et 2 selon la norme : ANSI/ISA-95.00.01-2010 (1EC 62264-1 Mod) Enterprise- Control System Intégration - Part 1: Models and Terminology.

**14.** Système autonome de gestion d'écoulement selon une quelconque revendication précédente, dans lequel le premier capteur (51) de la configuration de capteurs du système de gestion d'écoulement comprend un capteur de température situé à l'extrémité amont (11) du système de transport par pipeline (10), et :
l'un ou l'autre parmi :

- le premier capteur (51) comprend en outre un capteur de pression et le deuxième capteur (52) comprend un capteur de pression,
- le premier capteur (51) comprend en outre un capteur de pression et le deuxième capteur (52) comprend un capteur d'écoulement,
- le premier capteur (51) comprend en outre un capteur d'écoulement et le deuxième capteur (52) comprend un capteur de pression, ou
- le premier capteur (51) comprend en outre un capteur d'écoulement et le deuxième capteur (52) comprend un capteur d'écoulement.

**15.** Système autonome de gestion d'écoulement selon une quelconque revendication précédente, dans lequel l'unité de commande (20) détermine les valeurs de consigne possiblement en utilisant l'un ou plusieurs des algorithmes suivants : boucle de commande PID, algorithme d'apprentissage automatique pré-entraîné et/ou algorithme de recherche d'optimum global ou local.

**16.** Système autonome de gestion d'écoulement selon une quelconque revendication précédente, dans lequel l'actionneur (61, 62) de la configuration d'actionneurs est l'un ou l'autre parmi une vanne de commande, un séparateur à tambour, un compresseur, un injecteur de gaz ou une pompe.

**17.** Procédé pour la résolution de problèmes d'écoulement pendant le fonctionnement d'un système de transport de fluide par pipeline pour le transport d'un fluide à phases multiples, dans lequel le procédé comprend l'application du procédé mis en oeuvre par ordinateur du système de gestion d'écoulement selon l'une quelconque des revendications 1 à 16 pour prédire l'effet sur le comportement du fluide dans le système de transport à partir d'un jeu d'actions palliatives possibles, déterminer quelle action palliative doit être physiquement mise en oeuvre sur le système de transport ayant des problèmes d'écoulement, et la mise en oeuvre de l'action palliative par la mobilisation d'un ou de plusieurs actionneurs de la configuration d'actionneurs.

**18.** Procédé pour la prévention de problèmes d'écoulement pendant le fonctionnement d'un système de transport de fluide par pipeline pour le transport d'un fluide à phases multiples, dans lequel le procédé comprend l'application du procédé mis en oeuvre par ordinateur du système de gestion d'écoulement selon l'une quelconque des revendications 1 à 16 pour prédire le comportement du fluide dans le système de transport pendant un laps de temps dans le futur et déterminer la nécessité d'initier des actions palliatives pendant le laps de temps pour définir un calendrier opérationnel devant être mis en oeuvre par l'actionneur ou les actionneurs de la configuration d'actionneurs.

Figure 1

Figure 2    Prior art

mass

$u_{k,i-7/2}(x)$   $u_{k,i-5/2}(x)$   $u_{k,i-3/2}(x)$   $u_{k,i-1/2}(x)$   $u_{k,i+1/2}(x)$

i − 3   i − 2   i − 1   i − 1/2   i   i + 1/2   i + 1   x

Figure 3a)

Figure 3b)

Figure 3c)

Figure 4

Figure 5

Figure 6

Figure 7

Figure 8

Figure 9

Figure 10

Figure 11

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016341850 A1
- US 2019228124 A
- WO 2017174532 A
- WO 2019164859 A
- US 2018260499 A

**Non-patent literature cited in the description**

- **VEERSTEG, H. K. ; MALALASEKERA, W.** An Introduction to Computational Fluid Dynamics. Pearson Education Limited, 2007
- **CHI-WANG SHU.** Positivity-preserving high order schemes for convection dominated equations. Brown University
- **RANDALL J. LEVEQUE.** Finite Volume Methods for Hyperbolic Problems. Cambridge University Press, 2002
- **M. GRIEBEL ; M. KLITZ.** CLSVOF as a fast and mass-conserving extension of the level-set method for the simulation of two-phase flow problems. *NUMERICAL HEAT TRANSFER,* 2017, vol. 71 (1), 1-36